(19) Europäisches Patentamt
European Patent Office
Office européen des brevets

(11) EP 4 549 479 A1

(12) **EUROPEAN PATENT APPLICATION**
published in accordance with Art. 153(4) EPC

(43) Date of publication:
**07.05.2025 Bulletin 2025/19**

(21) Application number: **24785959.8**

(22) Date of filing: **10.07.2024**

(51) International Patent Classification (IPC):
***C08F 283/06*** (2006.01) ***A01N 25/30*** (2006.01)
***A01N 25/24*** (2006.01) ***A01N 25/04*** (2006.01)
***A01N 25/02*** (2006.01) ***A01P 1/00*** (2006.01)
***A01P 3/00*** (2006.01) ***A01P 7/02*** (2006.01)
***A01P 7/04*** (2006.01) ***A01P 13/00*** (2006.01)
***C08F 220/22*** (2006.01)

(52) Cooperative Patent Classification (CPC):
Y02A 50/30

(86) International application number:
**PCT/CN2024/104656**

(87) International publication number:
**WO 2025/055517 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.09.2023 CN 202311169113**

(71) Applicant: **Nankai University**
**Tianjin 300071 (CN)**

(72) Inventors:
- **SONG, Hongjian**
  **Nankai District**
  **Tianjin 300071 (CN)**
- **WANG, Qingmin**
  **Nankai District**
  **Tianjin 300071 (CN)**
- **ZHANG, Jingjing**
  **Nankai District**
  **Tianjin 300071 (CN)**
- **LIU, Yuxiu**
  **Nankai District**
  **Tianjin 300071 (CN)**
- **SU, Bo**
  **Jinnan District**
  **Tianjin 300350 (CN)**
- **ZENG, Mengdie**
  **Nankai District**
  **Tianjin 300071 (CN)**

(74) Representative: **Ström & Gulliksson AB**
**P.O. Box 4188**
**203 13 Malmö (SE)**

# (54) POLYMER NONIONIC SURFACTANT AS WELL AS PREPARATION METHOD THEREFOR AND USE THEREOF

(57) The present invention involves the technology field of surfactant, which provides a high-molecular non-ion surfactant and preparation methods and use thereof. The high-molecular non-ion surfactant has o-dihyoxy-benzene group, showing a strong adhesion ability. Its surface activity performance and adhesion performance can be regulated by adjusting the type and proportion of raw materials. The preparation method of the high-molecular non-ion surfactant is simple and low in cost, and it is easy to industrialize. In addition, the high-molecular non-ion surfactant can also be applied to prepare herbicide, fungicide, acaricide, and insecticide.

EP 4 549 479 A1

## Description

### Cross Reference to Related Applications

This application claims the benefit of Chinese patent application 202311169113.X filed on 12.09/2023, the contents of which are incorporated herein by reference.

### Technical Field

The present invention relates to the technical field of surfactant, in particular to a high-molecular non-ion surfactant and preparation method and use thereof.

### Background

With the rapid growth of the population, pesticides play an increasingly indispensable role in agricultural production. However, evaporation and drifting of pesticide droplets are inevitable during the spraying process, which will lead to a decrease in utilization during the transmission process. Because most of the plants have polar groups on the surface, the leaves have a certain degree of hydrophobicity, therefore, when the pesticide reaches the target plant, drops of pesticide solution will cause different degrees of bouncing, splashing, and crushing during the transmission process, so it is difficult to achieve pesticide deposition, which leading most pesticides to enter the natural environment such as soil and river, and threatening the ecological environment and human health.

At present, scientific researchers have made many efforts on how to increase the deposition efficiency of pesticides on plant leaves. Based on the characteristics of the surfactant it can quickly spread from solution bulk to a new generation interface such that surfactants can effectively suppress the rebounding of droplets on a solid surface and increase the effective deposition of liquid droplets on the surface of the plant blades, therefore, adding surfactants to pesticide formulations is one of the most effective ways to improve the performance of pesticides and increase their utilization rate.

However, the research of the surfactant in the prior art is mainly on its surface activity, and less research on its adhesion performance. In particular, no relevant reports were seen for the adhesion performance of non-ionic surfactants, so it is urgently needed to develop non-ion surfactants with adhesion performance.

### Disclosure of Invention

The present invention aims to overcome the problem of low pesticide utilization rate in the prior art and provide a high-molecular non-ion surfactant, in the first aspect, wherein the high-molecular non-ion surfactant contains structural units shown in the formula (1) or formula (2);

formula (1): 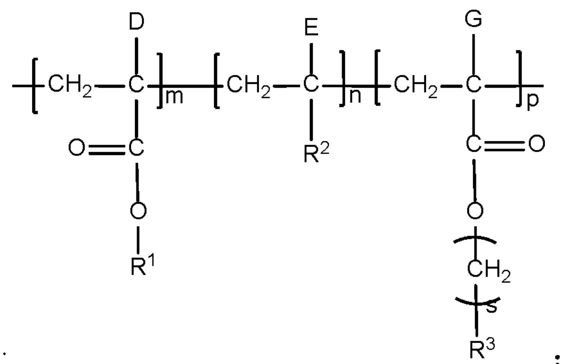 ;

formula (2): 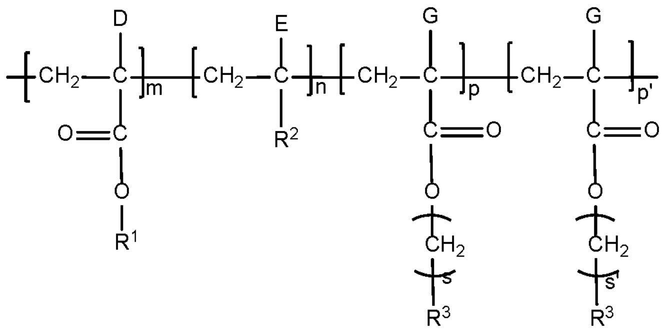 ;

Wherein $R^1$ includes at least one of H, alkali metal or

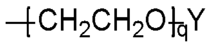 ,

q is an integer and $1 < q \leq 90$, Y is selected from H or the alkyl group of $C_1$-$C_6$;

$R^2$ includes at least one of

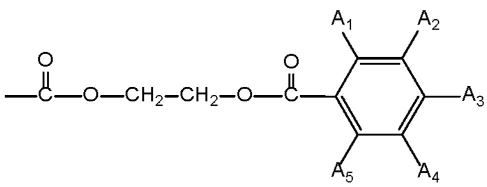 , 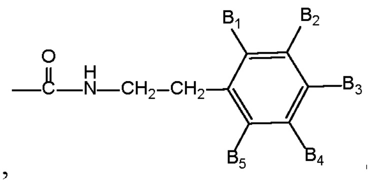 ,

or

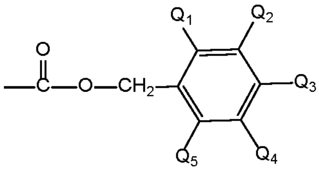 ,

$A_1$-$A_5$, $B_1$-$B_5$, $Q_1$-$Q_5$ are each independently selected from H, a hydroxyl group, or alkyl group of $C_1$-$C_6$, and at least two of $A_1$-$A_5$ are hydroxyl groups, at least two of $B_1$-$B_5$ are hydroxyl groups, at least two of $Q_1$-$Q_5$ are hydroxyl groups;
$R^3$ is selected from

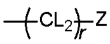 ,

r is an integer, and $2 \leq r \leq 6$; L and Z are independently selected from H or F;
D, E, G are independently selected from H or the alkyl group of $C_1$-$C_6$;
s and s' are independently selected from the integer of 1-6;
m, n, p and p' are independently selected from an integer greater than or equal to 1, and at least one of m, n, p and p' is 1.

The second aspect of the present invention provides a preparation method of high-molecular non-ion surfactant, the preparation method comprises the following steps:

Method 1: for high-molecular non-ion surfactants containing the structural units shown in formula (1), the method comprises: in presence of an initiator, monomer shown in formula (a-1), monomer shown in formula (a-2) and monomer shown in formula (a-3) are placed in a solvent for solution polymerization reaction to obtain the high-molecular non-ion surfactant containing the structural unit shown in formula (1);

Method 2: for high-molecular non-ion surfactants containing the structural units shown in formula (2), the method comprises: in the presence of an initiator, monomer shown in formula (a-1), monomer shown in formula (a-2), monomer shown in formula (a-3) and monomer shown in formula (a-4) are placed in a solvent for solution polymerization reaction to obtain the high-molecular non-ion surfactant containing the structural unit shown in formula (2);

formula (a-1): 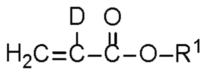 ; formula (a-2): 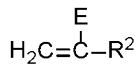 ;

formula (a-3): 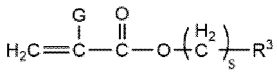 ; formula (a-4): 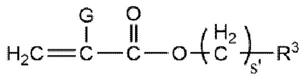 ;

wherein, definitions of $R^1$, $R^2$, $R^3$, $R^{3'}$ and D, E, G, s, s' are corresponding to the same definitions described in the first aspect.
preferably, the formula (a-4) has the structure shown in the formula (a-4'),

formula (a-4'): 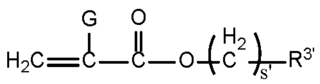 ;

wherein, $R^3$ and $R^{3'}$ are independently selected from

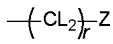

, and are not the same; r is an integer, and 2≤r≤6; L and Z are independently selected from H or F.

The third aspect of the present invention provides a synergist, wherein the synergist comprises a high-molecular non-ion surfactant described in the first aspect.
The fourth aspect of the present invention further discloses a use of a synergist described in the third aspect in herbicide, fungicide, acaricide, or insecticide.

**The beneficial effect of invention**

1. The high-molecular non-ion surfactant provided by the present invention shows a strong adhesion ability and its surface activity performance and adhesion performance can be regulated by adjusting the type and proportion of raw materials.
2. The high-molecular non-ion surfactant provided by the present invention has a structure, especially the polyphenol group of the molecule, which can form hydrogen bonds and interact with the polar groups on the surface of plant leaves, thereby reducing the bounce, splashing, and breaking behavior of mesotrione suspension agent of 15% concentration on plant leaves, which makes the 15% mesotrione suspension adding with the high-molecular non-ion surfactant increase the retention of plant leaves, and can further make plant leaves better absorb pesticides and also avoid pesticides entering the natural environment such as soil and rivers, as well as avoiding threats to the ecological environment and human health. At the same time, the prepared high-adhesive high-molecular non-ion surfactant is environmentally friendly, will not cause damage to plant leaves, and is safe to use.
3. The high-molecular non-ion surfactant preparation method provided by the present invention is an one step synthetic method and has the advantages of simple operation, high yield, low cost, easy control of reaction conditions, and easy industrial development.
4. The molecular weight of the high-molecular non-ion surfactant provided by the present invention can be precisely controlled, and its number-average molecular weight is 1000-100000 (g/mol). By adjusting the properties of high-molecular non-ion surfactants, the effect of molecular weight on the adhesion of high-molecular non-ion surfactants can be reduced.
5. The high-molecular non-ion surfactant provided by the present invention has relatively excellent surface activity, and the critical micelle concentration is 0.001-1g/L.

6. The high-molecular non-ion surfactant provided by the present invention has excellent ability to reduce plant surface activity, and has good wettability at the same time, and the minimum surface tension is 20-40mN/m.
7. The high-molecular non-ion surfactant provided by the present invention can be applied to prepare herbicide, fungicide, acaricide, or insecticide, and the rain-resistant performance prepared thereof is better than that of commercial additive agent SK-44, and has a good use prospect.

**Detailed Description**

The specific embodiments of the present invention are described in further detail below in conjunction with embodiments. To make the purpose, technical solution, and advantages of the present invention clearer, the technical solution in the embodiment of the present invention will be clearly and completely described below. The described embodiments are some embodiments of the present invention, not all embodiments. Based on the embodiments in the present invention, other embodiments obtained by a person skilled in the art without making creative labor belong to the scope of protection of the present invention. Unless otherwise expressly stated, throughout the description and claims, the term "including" or its transformations such as "contains" or "includes", etc., will be understood to include the stated components and steps, without excluding the existence of other substance components or steps.
The endpoints of the ranges and any values of the ranges disclosed herein are not limited to the precise range or value, and these ranges or values shall be understood to encompass values adjacent to these ranges or values. For numerical ranges, each range between its endpoints and individual point values, and each point value can be combined to give one or more new numerical ranges, and such numerical ranges should be construed as specifically disclosed herein.
In addition, To better illustrate the present invention, numerous specific details are given in the specific embodiments below.
Those skilled in the art should understand that the present invention can also be exploited without certain specific details. To highlight the main purpose of the present invention, in some embodiments, the raw materials and methods familiar to those skilled in the art are not described in detail.
The embodiment of the present invention is described in detail below. However, these embodiments are exemplary, the present invention is not limited to it, and the present invention is defined by the scope of the claims.
In the present invention, when the terms are not otherwise defined, the following terms used in the description and claims shall have the following meanings.
In the present invention, "solvent" refers to a liquid that dissolves solid, liquid, or gaseous solute during the reaction. The solvent of the present invention includes but is not limited to, 1,2-dichloroethane, N,N-dimethylformamide, dimethyl sulfoxide, tetrahydrofuran, 1,4-dioxane, and acetonitrile.
In the present invention, "initiator" refers to a free radical initiator, which refers to a class of compounds that are easily decomposed into primary free radicals by heat, and the initiators include but are not limited to azodiisobutyronitrile, azodiisoheptonitrile, benzoyl peroxide, and tert-butyl hydroperoxide.
The percentage content in the present invention is generally understood according to the conventional meaning in the art and usually refers to the weight percentage content.
In the present invention, alkyl group of $C_1$-$C_6$ can be selected from methyl, ethyl, propyl, butyl, amyl, and hexyl.
The alkali metal in the present invention can be selected from one of lithium (Li), sodium (Na), and potassium (K).
The present invention provides a high-molecular non-ion surfactant, wherein the high-molecular non-ion surfactant contains structural units shown in the formula (1) or formula (2);

formula (1): 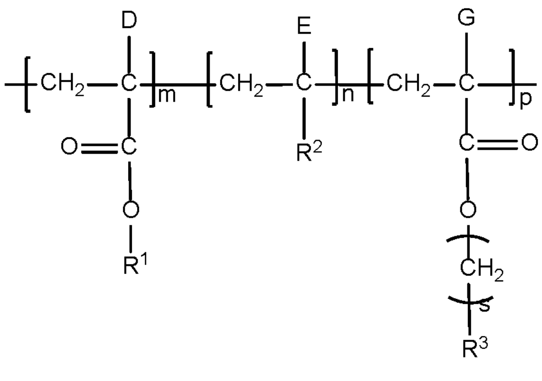 ;

formula (2): 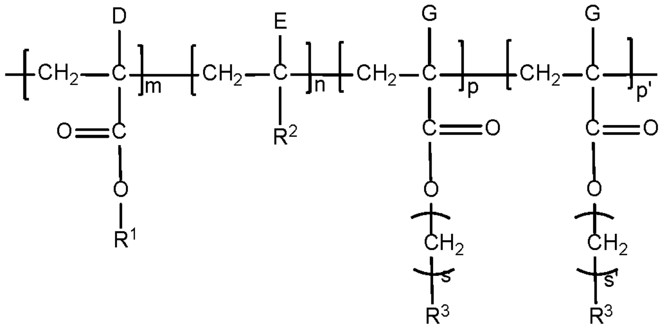 ;

wherein $R^1$ includes at least one of H, alkali metal or

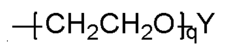,

q is an integer and $1 < q \leq 90$, Y is selected from H or alkyl group of $C_1$-$C_6$;
$R^2$ includes at least one of

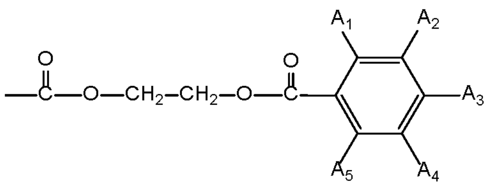, 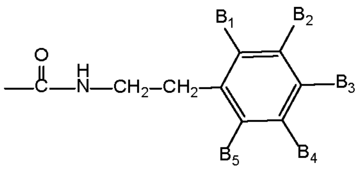

or

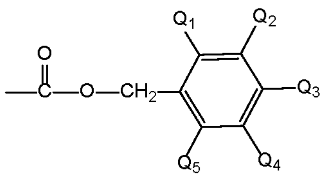,

$A_1$-$A_5$, $B_1$-$B_5$, $Q_1$-$Q_5$ are each independently selected from H, a hydroxyl group, or alkyl group of $C_1$-$C_6$, and at least two of $A_1$-$A_5$ are hydroxyl groups, at least two of the $B_1$-$B_5$ are hydroxyl groups, at least two of the $Q_1$-$Q_5$ are hydroxyl groups;
$R^3$ is selected from

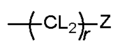,

r is an integer, and $2 \leq r \leq 6$; L and Z are independently selected from H or F;
D, E, G are independently selected from H or alkyl group of $C_1$-$C_6$;
s and s' are independently selected from an integer of 1-6;
m, n, p and p' are independently selected from an integer greater than or equal to 1, and at least one of m, n, p and p' is 1.

Wherein q can be $10<q\leq 90$, $20<q\leq 60$, $15<q\leq 50$, $10<q\leq 50$; $R^3$ can be selected from $-(CH_2)_2-H$, $-(CH_2)_3-H$, $-(CH_2)_4-H$, $-(CH_2)_5-H$, $-(CH_2)_6-H$, $-(CH_2)_2-F$, $-(CH_2)_3-F$, $-(CH_2)_4-F$, $-(CH_2)_5-F$, $-(CH_2)_6-F$, $-(CF_2)_2-H$, $-(CF_2)_3-H$, $-(CF_2)_4-H$, $-(CF_2)_5-H$, $-(CF_2)_6-H$, $-(CF_2)_2-F$, $-(CF_2)_3-F$, $-(CF_2)_4-F$, $-(CF_2)_5-F$, $-(CF_2)_6-F$。

In the present invention, the inventor finds that in formula (1) or formula (2), when the number of hydroxyl groups on the $R^2$ benzene ring reaches 2 or more, hydrogen bonds can be formed between the polyphenol groups and the polar groups on the surface of plant leaves, thereby reducing the bounce, splashing and breaking behaviors of the suspension agent on the plant leaves.preferably, wherein in the structural units shown in formula (1) and formula (2),

wherein, $R^1$ includes at least one of H, alkali metal or

$$-[CH_2CH_2O]_q-Y ,$$

q is an integer and $1 < q \leq 90$, Y is selected from H or alkyl group of $C_1$-$C_6$;
$R^2$ includes at least one of

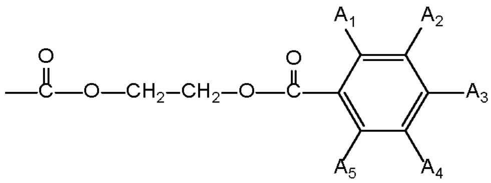
,
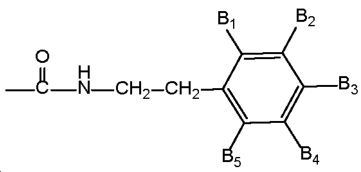

or

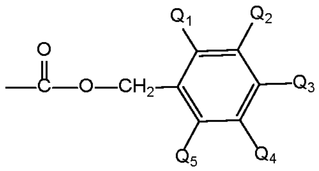

, $A_1$-$A_5$, $B_1$-$B_5$, $Q_1$-$Q_5$ are each independently selected from H, a hydroxyl group, or alkyl group of $C_1$-$C_6$, and at least two of $A_1$-$A_5$ are hydroxyl groups, at least two of the $B_1$-$B_5$ are hydroxyl groups, at least two of $Q_1$-$Q_5$ are hydroxyl groups;
$R^3$ is selected from

$$-(CL_2)_r-Z$$

, r is an integer, and $2 \leq r \leq 6$; L and Z are independently selected from H or F;
D, E, and G are independently selected from H or alkyl group of $C_1$-$C_4$;
s and s' are independently selected from an integer of 1-4;
m, n, p and p' are independently selected from an integer greater than or equal to 1, and at least one of m, n, p and p' is 1.

By reasonably adjusting the structure of the high-molecular non-ion surfactant described in the present invention, suitable surface activity properties, adhesion properties, etc. can be obtained, thereby enhancing the retention and deposition effect of pesticides on plant leaves. To obtain a better synergistic effect, in a preferred embodiment, in the structural units shown in formula (1) and formula (2),

wherein, $R^1$ includes at least one of H, Na or

$$-[CH_2CH_2O]_q-Y$$

, q is an integer and $1 < q \leq 90$, Y is selected from H or $CH_3$;
$R^2$ includes at least one of

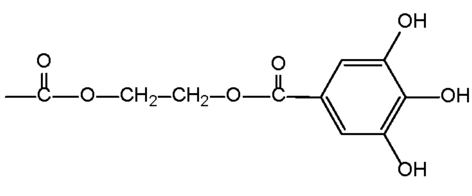
,
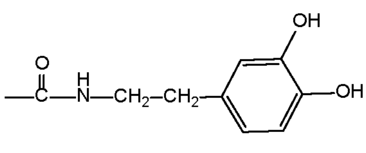

or

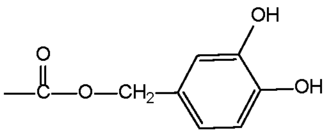
;

$R^3$ is selected from

$$-(CL_2)_r-Z$$,

, r is an integer, and 2≤r≤6; L and Z are independently selected from H or F;
D, E, and G are independently selected from H or $CH_3$;
s and s' are independently selected from an integer of 1 or 2;
m, n, p and p' are independently selected from an integer greater than or equal to 1, and at least one of m, n, p and p' is 1.

In the present invention, the inventor finds that by reasonably limiting the groups of $R^1$ and $R^3$, suitable surface activity properties and adhesion properties can be obtained. Preferably, in the structural units shown in formula (1) and formula (2),

wherein, $R^1$ includes

$$-[CH_2CH_2O]_q-Y$$

, q is an integer and 10 <q≤50;
$R^2$ includes at least one of

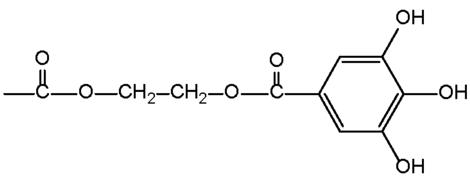
,
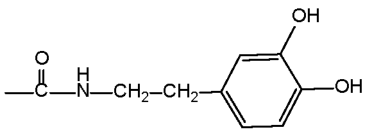

or

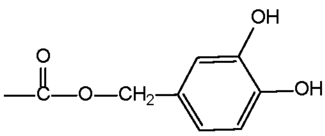
;

$R^3$ is selected from

$$-(CL_2)_r-Z$$,

r is an integer, and 4≤r≤6; L and Z are independently selected from H or F;
D, E, and G are independently selected from H or $CH_3$;
s and s' are independently selected from an integer of 1 or 2;
m, n, p and p' are independently selected from an integer greater than or equal to 1, and at least one of m, n, p and p' is 1.

Preferably, the formula (2) has a structural shown in formula (2'):

formula (2'): 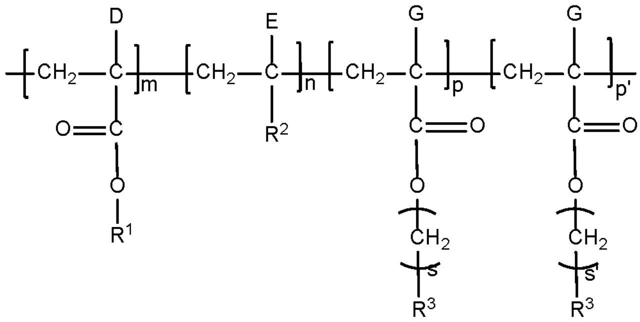 ;

wherein, $R^3$, $R^{3'}$ are independently selected from

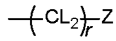 ,

r is an integer, and $2 \leq r \leq 6$; L and Z are independently selected from H or F.

In the present invention, when $R^3$ and $R^{3'}$ represent different structures, the high-molecular non-ion surfactant has better active properties and adhesion properties.

According to another preferred embodiment,

the formula (1) includes at least one of structural shown in formula (I-1), formula (I-2), formula (I-3), formula (1-4), formula (1-5), formula (I-6), formula (1-7), formula (I-8), formula (I-9), formula (I-10), formula (I-11) and formula (I-12); the formula (2) includes at least one of structural shown in formula (II-1), formula (II-2), formula (II-3), formula (II-4), formula (II-5), formula (II-6), formula (II-7), formula (II-8), formula (II-9), formula (II-10), formula (II-11), formula (11-12);

formula (I-1): 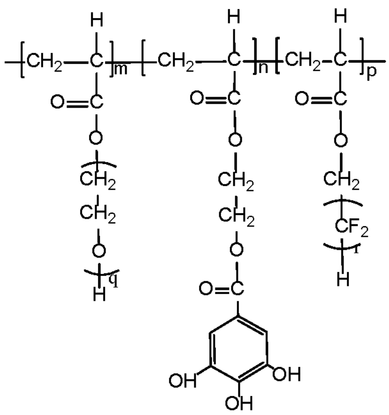 ; formula (I-2): 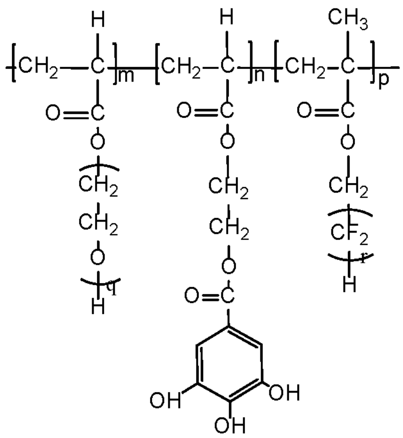 ;

formula (I-3): 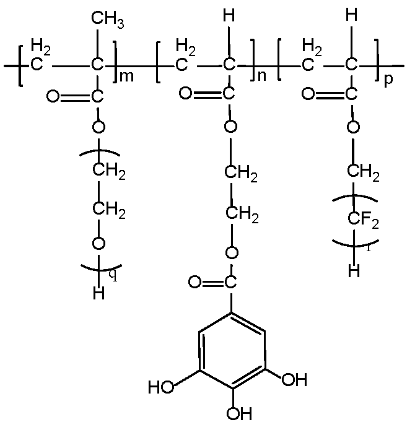 ; formula (I-4): 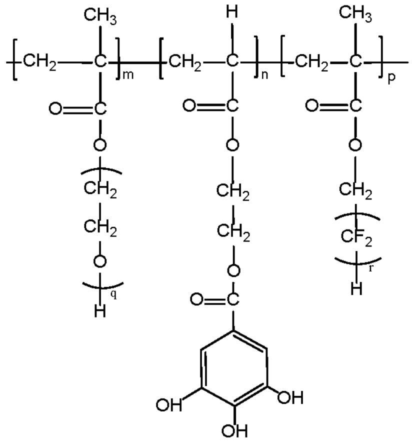 ;

formula (I-5): 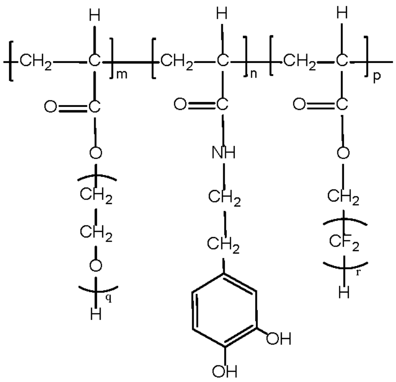 ; formula (I-6): 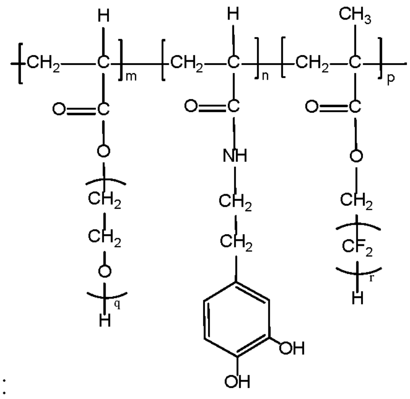 ;

formula (I-7): 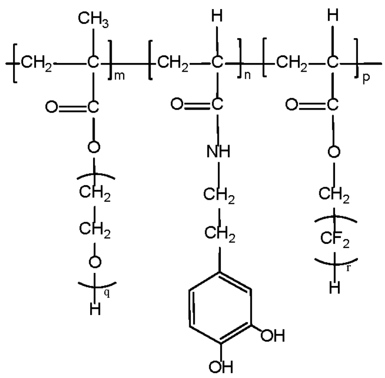 ; formula (I-8): 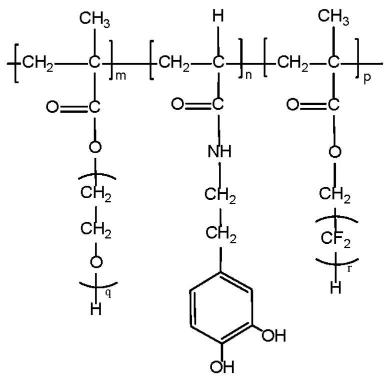 ;

formula (I-9) : 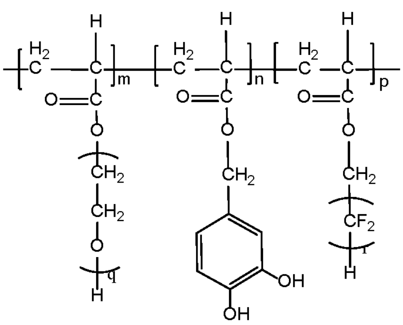 ; formula (I-10) : 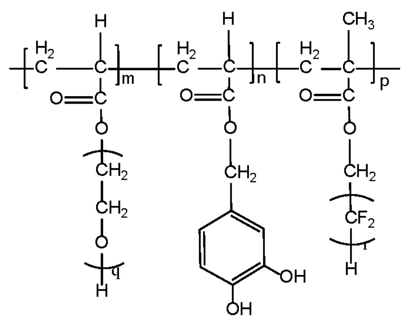 ;

formula (I-11): 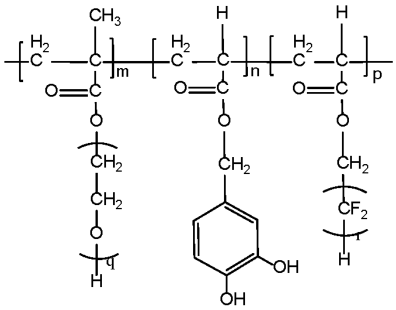 ; formula (I-12): 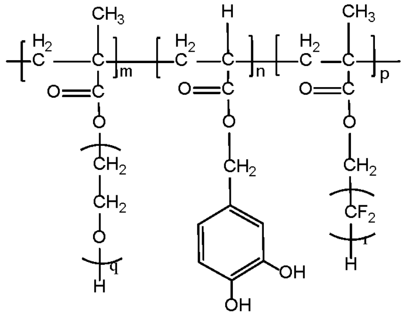 ;

formula (II-1): 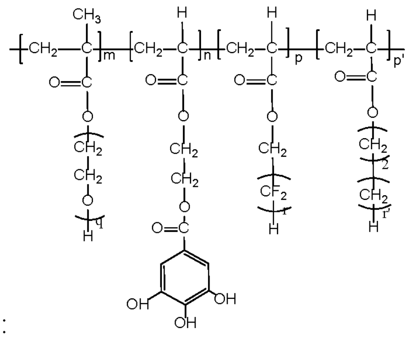 ; formula (II-2): 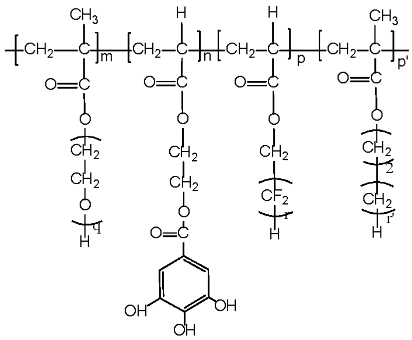 ;

formula (II-3): 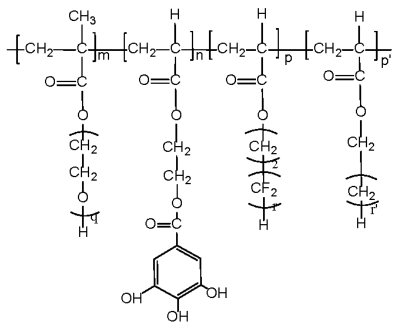 ; formula (II-4): 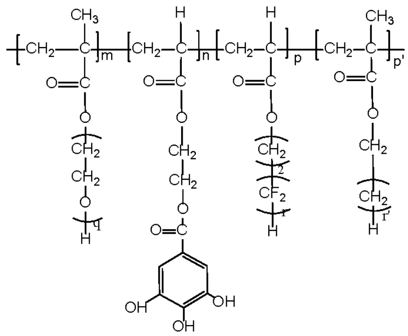 ;

formula (II-5): 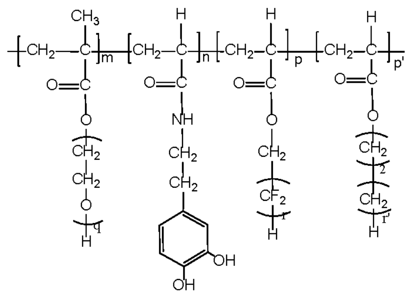 ; formula (II-6): 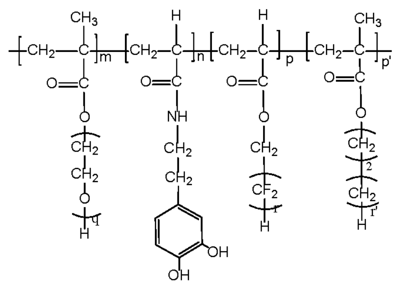 ;

formula (II-7): 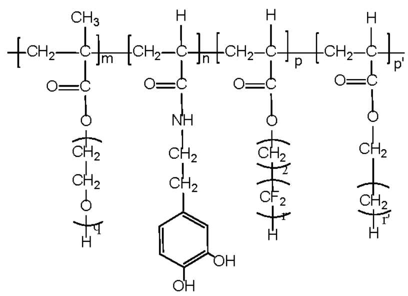 ; formula (II-8): 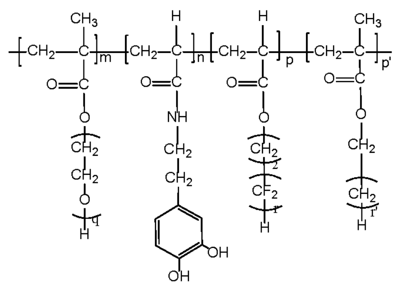 ;

formula (II-9): 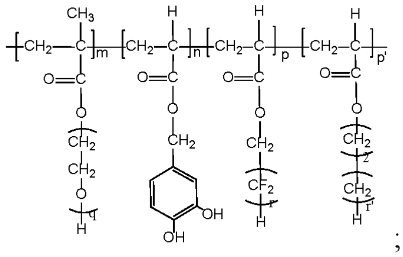 ; formula (II-10): 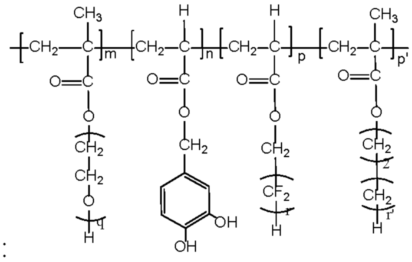 ;

formula (II-11): 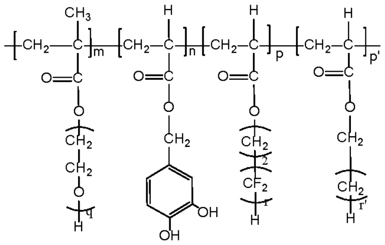 ;formula (II-12): 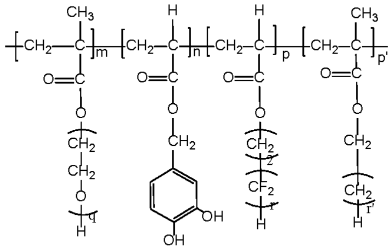 .

wherein q is an integer and 10 <q≤50; r and r' are integers and 2≤r≤6; m, n, p and p' are independently selected from an integer with greater than or equal to 1, and at least one of m, n, p and p' is 1.

According to the above-preferred embodiment, the high-molecular non-ion surfactant can increase the retention of the suspension agent on the surface of the plant leaves and further can make the plant leaves better absorb the pesticide, avoid the pesticide entering the natural environment such as soil and river, thereby reducing the threat to the ecological environment and human health.

The present invention can obtain suitable surface activity properties, adhesion properties, and the like by adjusting the structure and proportion of the high-molecular non-ion surfactant, thereby enhancing the retention and deposition effect of pesticides on plant leaf surfaces. For better synergistic effect, preferably, in the structural unit shown in formula (1), a ratio of m:n:p is 1:0.1-500:0.01-100 (e.g., 1:1-100:0.5-50, 1:1-50:0.5-30, 1:1-20:0.5-20); in structural units shown in the formula (2), ratio of m: n: p: p' is 1: 0.1-500: 0.01-100: 0.1-10 (e.g., 1:1-100:0.5-50:0.1-8, 1:1-50:0.5-30:0.1-5, 1:1-20:0.5-20:0.2-5).

By adjusting the molecular weight of the high-molecular non-ion surfactant described in the present invention within a certain range, suitable surface activity properties, adhesion properties and the like can be obtained, such that, preferably, the number-average molecular weight of the high-molecular non-ion surfactant is 1000-100000 (g/mol), and preferably 70000-100000 (g/mol) (for example, 70000-90000 (g/mol), 70000-80000 (g/mol)).

By adjusting the critical micelle concentration and surface tension of the high-molecular non-ion surfactant described in the present invention within a certain range, and appropriate surface activity properties, and adhesion properties can be obtained. Therefore, preferably, a critical micelle concentration of the high-molecular non-ion surfactant is 0.001-1g/L, and preferably 0.001-0.7g/L (for example, 0.01-0.7g/L, 0.05-0.7g/L).

Preferably, a surface tension of the high-molecular non-ion surfactant is 20-40mN/m (for example, 25-40 mN/m, 30-40 mN/m).

The second aspect of the present invention discloses a preparation method of the high-molecular non-ion surfactant, the method includes:

method 1: for high-molecular non-ion surfactants containing structural units shown in formula (1), the method comprises: in presence of an initiator, monomer shown in formula (a-1), monomer shown in formula (a-2) and monomer shown in formula (a-3) are placed in a solvent for solution polymerization reaction to obtain the high-molecular non-ion surfactant containing the structural unit shown in formula (1);

method 2: for high-molecular non-ion surfactants containing structural units shown in formula (2), the method comprises: in presence of an initiator, monomer shown in formula (a-1), monomer shown in formula (a-2), monomer shown in formula (a-3) and monomer shown in formula (a-4) are placed in a solvent for solution polymerization reaction to obtain the high-molecular non-ion surfactant containing the structural unit shown in formula (2);

formula (a-1)： 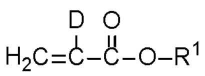 ； formula (a-2)： 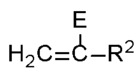 ；

formula (a-3): 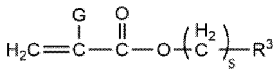 ; formula (a-4): 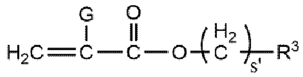 ;

wherein, definitions of $R^1$, $R^2$, $R^3$, $R^{3'}$ and D, E, G, s, s' are corresponding to the same definitions described in any one of claims 1-7;
preferably, the formula (a-4) has the structure shown in the formula (a-4'),

formula (a-4'): 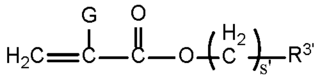 ;

wherein, $R^3$ and $R^{3'}$ are independently selected from

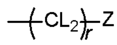

, and $R^3$, $R^{3'}$ are not the same; r is an integer, and 2≤r≤6; L and Z are independently selected from H or F.

The process of preparing the high-molecular non-ion surfactant in the preparation method of the present invention is as shown as by the following equation:

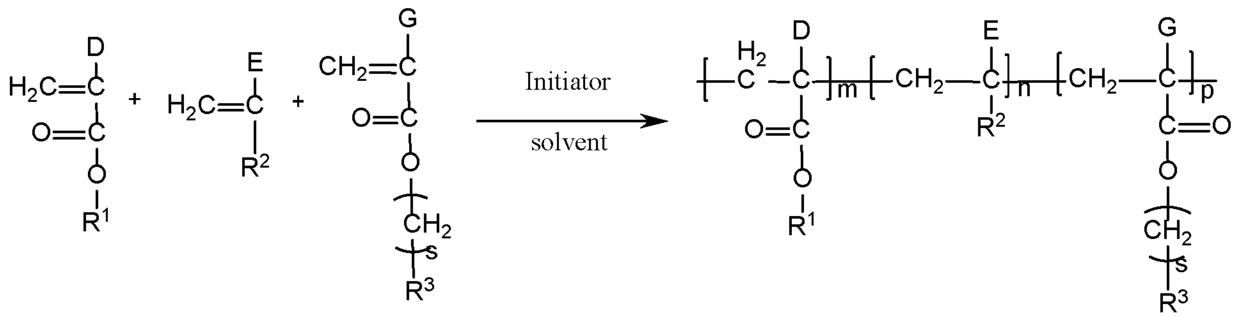


or

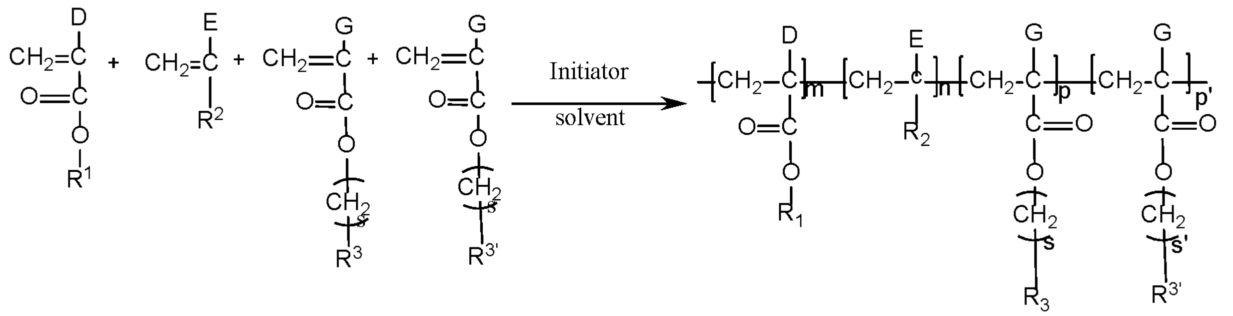


In the preparation method of high-molecular non-ion surfactant, the present invention can obtain suitable surface activity properties, adhesion properties, and the like by adjusting the proportion of dosing raw materials, thereby enhancing the retention and deposition effect of pesticides on plant leaf surfaces. For a better synergistic effect, preferably, the preparation method of high-molecular non-ion surfactant includes:

method 1: for high-molecular non-ion surfactants containing structural units shown in formula (1), the method comprises: placing 1-20 parts of formula (a-1), 1-20 parts of formula (a-2), 1-20 parts of formula (a-3) in a solvent for solution polymerization reaction which are stirred at 50-100 °C to obtain a first mixed solution, taking a heat preservation reaction after dropwise adding an initiator to the first mixed solution, and obtaining the high-molecular non-ion surfactant;
method 2: for high-molecular non-ion surfactants containing the structural units shown in formula (1), the method

comprises: placing 1-20 parts of formula (a-1), 1-20 parts of formula (a-2), 1-20 parts of formula (a-3) and 1-20 parts of formula (a-4) in a solvent for solution polymerization reaction which are stirred at 50~100 °C to obtain a first mixed solution, taking a heat preservation reaction after dropwise adding an initiator to the first mixed solution, and obtaining the high-molecular non-ion surfactant.

In the present invention, the solvent and initiator used in the preparation of high-molecular non-ion surfactant can be conventional substances in the art, which is not limited by the present invention. In the preparation process of the high-molecular non-ion surfactant, to ensure the high efficiency and stability of the reaction, preferably, the solvent used in the solution polymerization reaction comprises one or more of 1,2-dichloroethane, N,N-dimethylformamide, dimethyl sulfoxide, tetrahydrofuran, 1,4-dioxane, and acetonitrile. Further, to ensure a smooth reaction in the preparation method of the high-molecular non-ion surfactant, preferably, based on a total weight of the monomers shown in formula (a-1), formula (a-2) and formula (a-3) or based on a total weight of the monomers shown in formula (a-1), formula (a-2), formula (a-3) and formula (a-4), a dosage of the solvent is 100-700wt%, preferably 200-500wt% (for example, 200wt%-300wt%, 200-400wt%, 300-500wt%, 300-400wt%) .

Preferably, the initiator comprises one or more of azodiisobutyronitrile, azodiisoheptanitrile, dimethyl azodiisobutyrate, benzoyl peroxide, tert-butyl peroxybenzoate, and methyl ethyl ketone peroxide;

Preferably, a dosage of the initiator is 1-10wt% based on a total weight of the monomers shown in formula (a-1), formula (a-2) and formula (a-3) or based on a total weight of the monomers shown in formula (a-1), formula (a-2), formula (a-3) and formula (a-4).

To ensure a high efficiency and stable reaction in the preparation method of the high-molecular non-ion surfactant, preferably, time of the heat preservation reaction in the preparation method of the high-molecular non-ion surfactant can be 6-50h, and preferably is 25-40h.

The third aspect of the present invention discloses a synergist, which comprises a high-molecular non-ion surfactant described in the first aspect.

The fourth aspect of the present invention also discloses use of the synergist described in the third aspect in herbicide, fungicide, acaricide, or insecticide.

The present invention is described in detail below through embodiments, but the present invention is not limited to the following embodiments. In the following examples, the various raw materials used are commercially available unless otherwise specified.

In the following examples, the performance test methods involved are as follows:

1. Molecular weight measurement method of high-molecular non-ion surfactant: the sample was dissolved in chromatographic grade tetrahydrofuran and determined by gel permeation chromatography (GPC) (Waters). Among them, the flow rate of chromatographic grade tetrahydrofuran is 1mL/min; A polystyrene sample was used as a standard for molar mass calibration.

2. Test method of surface tension of high-molecular non-ion surfactant: a series of different concentrations of high-molecular non-ion surfactant are configured, and the surface tension test is carried out by JK99M automatic static surface tension instrument by lifting ring method (outer diameter 20.30 mm, platinum wire 0.30mm, circumference 61.89mm, density 0.998g/$cm^3$, temperature 25±1 °C). The instrument is calibrated with pure water before and after the test.

3. Test method for the critical micelle concentration of high-molecular non-ion surfactant: make a graph of the logarithm of surface tension and concentration, and when the surface adsorption reaches saturation, the value corresponding to the turning point of the curve is the critical micelle concentration.

4. Simulated rainwater washout experiment: high-molecular non-ion surfactant is added to herbicides, fungicides, acaricides, or insecticides as synergists, and then simulated rainwater washout experiments are carried out, the specific operation steps are as follows:

The target blade is fixed on the glass slide with glue, and then the prepared high-molecular non-ion surfactant is dropped on the target leaf. After the foliar surface is dried, the foliar inclination angle is fixed at 30°, and then the foliar surface is repeatedly washed with deionized water. After washing, the leaves were dried and removed, and immersed in the test solvent, and the content of herbicides, fungicides, acaricides, or insecticides deposited on the target foliage after simulated rainwater washing was measured by high-performance liquid chromatography.

5. Pesticide retention test method: weighing 0.05g (accurate to 0.0001 g) 15% mesotrione suspension (herbicide), 30% glyphosate isopropylamine saline (herbicide), 41% glyphosate isopropylamine saline (herbicide), 200g/L glufosinate-ammonium water agent (herbicide), 50% butachlor emulsifiable concentrate (herbicide), 6% kasugamycin aqueous solution (fungicide), 25% pyraclostrobin suspension (fungicide), 20% thiazole zinc suspension (fungicide), 20% Samples of ethoxazole suspension (acaricide), 34% spirodiclofen aqueous suspension concentrate (acaricide), 15% pyridafen EC (acaricide) and 5% avermectin EC (insecticide) and placing them into 50mL volumetric flasks, and then the standards were completely dissolved by ultrasonic shaking for 5 min and then cooled to room

temperature. The mother liquor with a concentration of 1000mg/L was obtained by filtration.

After diluting the above mother liquor, standard solutions with concentrations of 50mg/L, 100mg/L, 200mg/L, 300mg/L, and 500mg/L were prepared respectively. To dissolve evenly, the standard solution was ultrasonically dispersed for 5 min.

After the sample is dissolved with solvent, the preparation in the sample is separated by high-performance liquid chromatography, and quantified by external standard method. The injection volume was 20 μL and the flow rate was 1.0 mL/min. The mass concentration of the specimen is calculated according to the following formula:

$$w_1 = \frac{A_2 m_1 w_2}{A_1 m_2};$$

In the formula, $W_1$ is the mass fraction of the preparation in the standard solution; $W_2$ is the mass fraction of the preparation in the sample solution; $A_1$ is the peak area of the standard solution; $A_2$ is the peak area of the sample solution; $m_1$ is the mass of the standard sample; $m_2$ is the mass of the sample.

Wherein, the blank control experiment in embodiment 1-11 refers to the experiment of spraying the barnyard grass with a 15% mesotrione suspension without adding a high-molecular non-ion surfactant to test the retention of the mesotrione suspension on the leaf surface of the barnyard grass.

The blank control experiment in embodiment 12-22 is to add the existing commercial surfactant SK-44 as a synergist to a herbicide, fungicide, acaricide, or insecticide, and carry out a simulated rainwater scouring experiment. The procedure is identical to the previous procedure, and the amount of herbicide, fungicide, acaricide, or insecticide deposited on the target foliage is measured by high-performance liquid chromatography.

Example 1

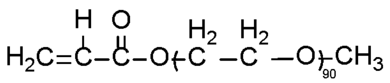

,

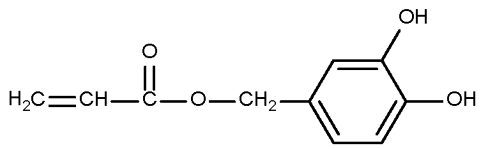

and

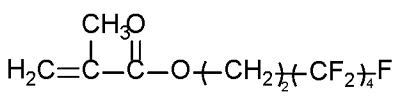

are dissolved in N,N-dimethylformamide (the usage of the solvent makes the total concentration of the monomers be 40wt%) according to the mass ratio of 1:20:1, stirring and heating to 80 °C, after adding 8wt% dimethyl azodiisobutyrate dropwise (based on the total mass of the monomers), the reaction is held for 20h at the temperature, and then by removing the solvent N, N-dimethylformamide, the high-molecular non-ion surfactant C1 can be obtained, and the synthesis equation is as follows:

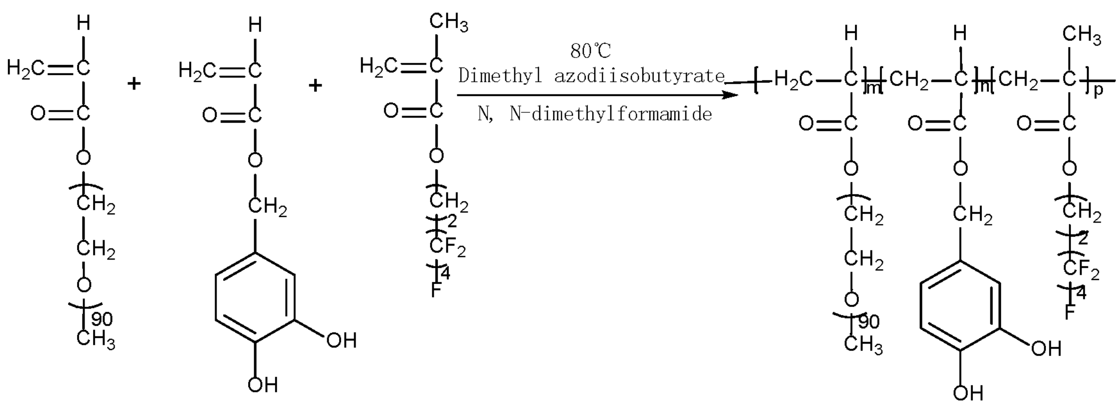

In the formula, m, n, p are independently selected from an integer greater than or equal to 1, and at least one in m, n, p is 1.

After testing, the number-average molecular weight of C1 was 50996 (g/mol), the critical micelle concentration was 0.466 g/L, and the corresponding minimum surface tension was 32mN/m. At the same time, according to the test results of 15wt% mesotrione suspension and 15wt% mesotrione suspension with 2wt% high-molecular non-ion surfactant C1 on the leaf surface of barnyard grass, the retention of the latter was increased by 25% compared with the former.

Example 2

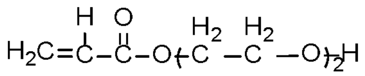

,

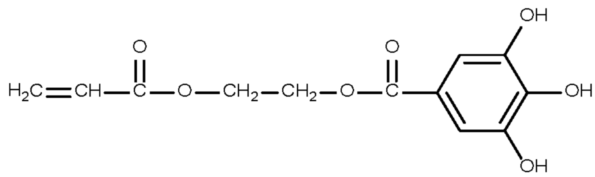

and

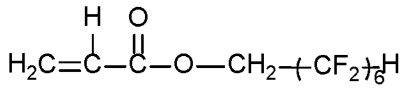

are dissolved in tetrahydrofuran (the usage of the solvent makes the total concentration of the monomers be 32wt%) according to the mass ratio of 15:10:1, stirring and heating to 70 °C, after adding 5wt% Azodiisobutyronitrile (based on the total mass of the monomers), the reaction is held for 6h at the temperature, and then by removing the solvent tetrahydrofuran, the high-molecular non-ion surfactant C2 can be obtained, and the synthesis equation is as follows:

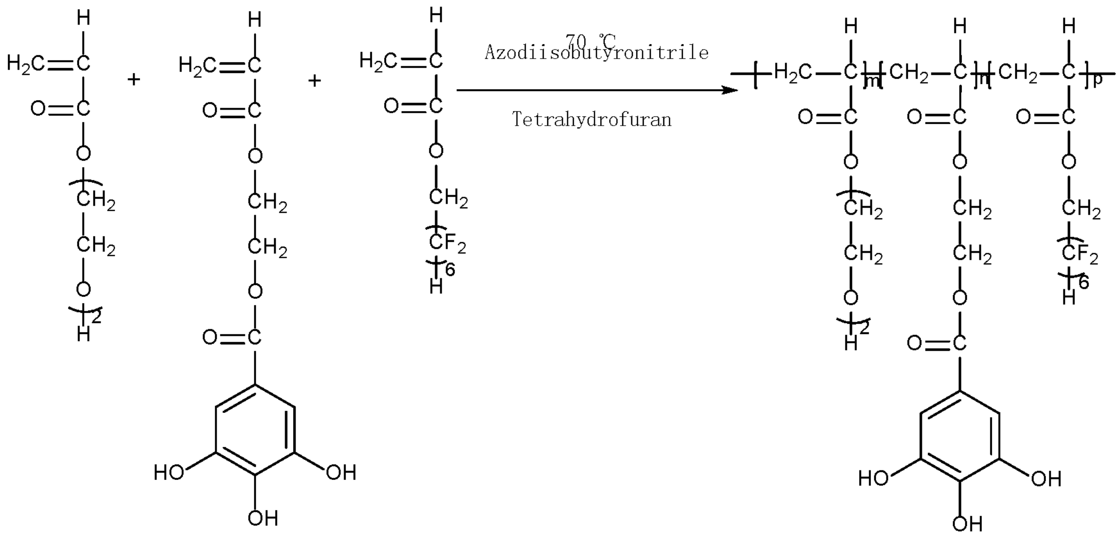


In the formula, m, n, p are independently selected from an integer greater than or equal to 1, and at least one in m, n, p is 1.

After testing, the number-average molecular weight of C2 was 12880 (g/mol), the critical micelle concentration was 0.01 g/L, and the corresponding minimum surface tension was 25mN/m. At the same time, according to the test results of 15wt% mesotrione suspension and 15wt% mesotrione suspension with 2wt% high-molecular non-ion surfactant C2 on the leaf surface of barnyard grass, the retention of the latter was increased by 28% compared with the former.

Example 3

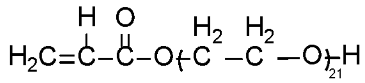

,

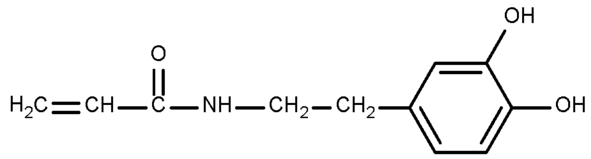

and

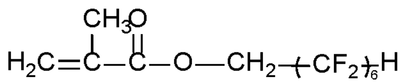

are dissolved in 1,4-Dioxane (the usage of the solvent makes the total concentration of the monomers be 12.5wt%) according to the mass ratio of 1:1:20, stirring, and heating to 50 °C, after adding 2wt% azodiisoheptonitrile (based on the total mass of the monomers), the reaction is held for 30h at the temperature, and then by removing the solvent 1,4-Dioxane, the high-molecular non-ion surfactant C3 can be obtained, and the synthesis equation is as follows:

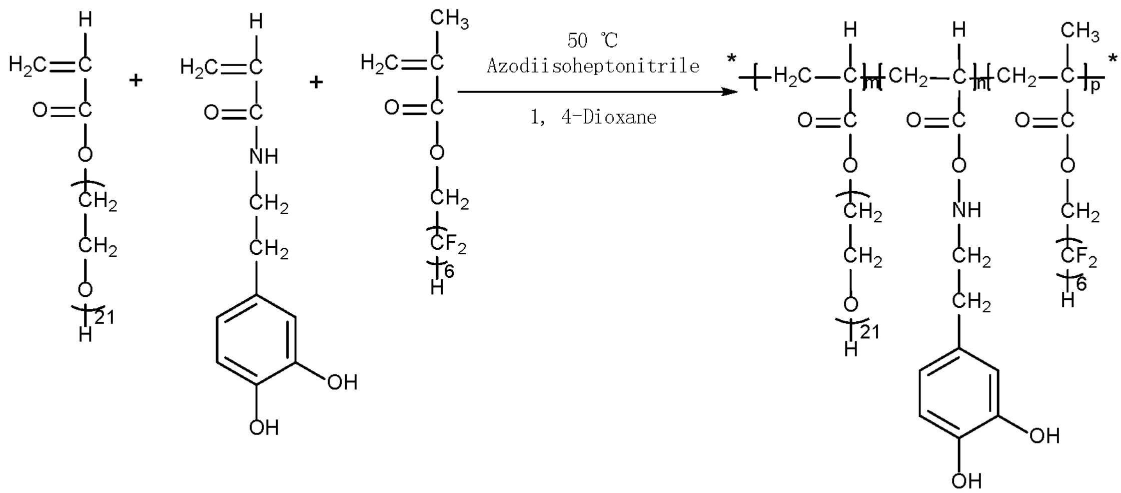


In the formula, m, n, p are independently selected from an integer greater than or equal to 1, and at least one in m, n, p is 1.

After testing, the number-average molecular weight of C3 was 100000 (g/mol), the critical micelle concentration was 0.001 g/L, and the corresponding minimum surface tension was 20mN/m. At the same time, according to the test results of 15wt% mesotrione suspension and 15wt% mesotrione suspension with 2wt% high-molecular non-ion surfactant C3 on the leaf surface of barnyard grass, the retention of the latter was increased by 47% compared with the former.

Example 4

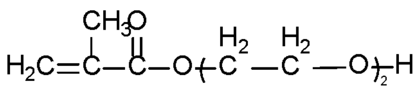

,

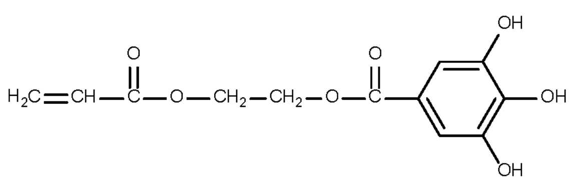

and

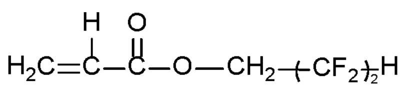

are dissolved in dimethyl sulfoxide (the usage of the solvent makes the total concentration of the monomers be 37wt%) according to the mass ratio of 1:12:15, stirring and heating to 80 °C, after adding 10wt% tert-butyl peroxybenzoate (based on the total mass of the monomers), the reaction is held for 48h at the temperature, and then by removing the solvent Dimethyl sulfoxide, the high-molecular non-ion surfactant C4 can be obtained, and the synthesis equation is as follows:

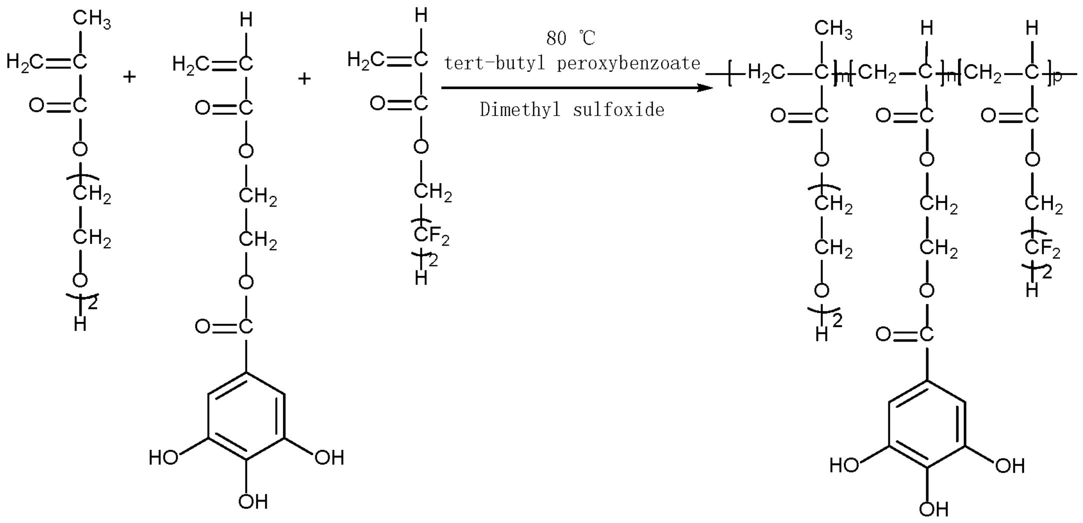


In the formula, m, n, p are independently selected from an integer greater than or equal to 1, and at least one in m, n, p is 1.

After testing, the number-average molecular weight of C4 was 52670 (g/mol), the critical micelle concentration was 0.139 g/L, and the corresponding minimum surface tension was 37mN/m. At the same time, according to the test results of 15wt% mesotrione suspension and 15wt% mesotrione suspension with 2wt% high-molecular non-ion surfactant C4 on the leaf surface of barnyard grass, the retention of the latter was increased by 30% compared with the former.

Example 5

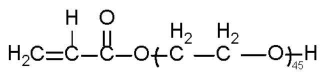

,

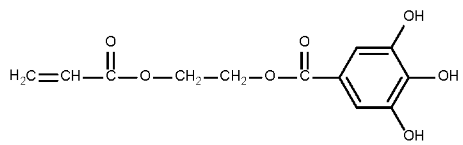

and

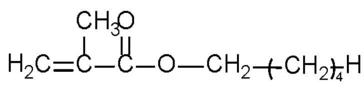

are dissolved in acetonitrile (the usage of the solvent makes the total concentration of the monomers be 45wt%) according to the mass ratio of 20:20:1, stirring and heating to 60°C, after adding 3wt% benzoyl peroxide (based on the total mass of the monomers), the reaction is held for 30h at the temperature, and then by removing the solvent acetonitrile, the high-molecular non-ion surfactant C5 can be obtained, and the synthesis equation is as follows:

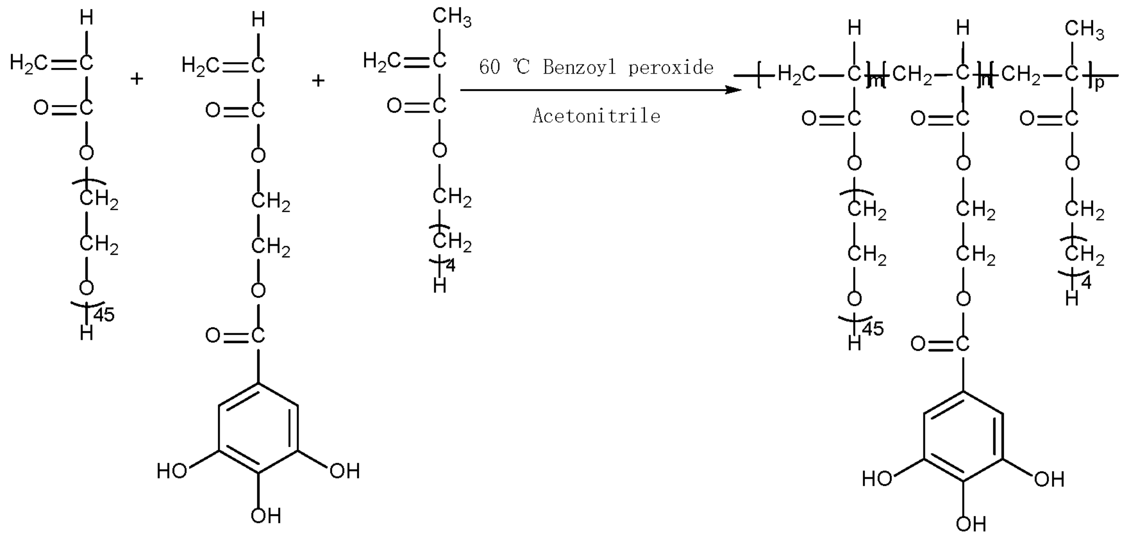


In the formula, m, n, p are independently selected from an integer greater than or equal to 1, and at least one in m, n, p is 1.

After testing, the number-average molecular weight of C5 was 76800 (g/mol), the critical micelle concentration was 0.68 g/L, and the corresponding minimum surface tension was 40mN/m. At the same time, according to the test results of 15wt% mesotrione suspension and 15wt% mesotrione suspension with 3wt% high-molecular non-ion surfactant C5 on the leaf surface of barnyard grass, the retention of the latter was increased by 40% compared with the former.

Example 6

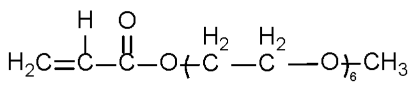

,

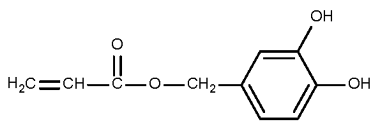

and

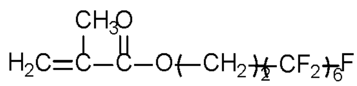

are dissolved in N, N-dimethylformamide (the usage of the solvent makes the total concentration of the monomers be 28wt%) according to the mass ratio of 6:10:8, stirring and heating to 100°C, after adding 1wt% tert-butyl peroxybenzoate (based on the total mass of the monomers), the reaction is held for 15h at the temperature, and then by removing the solvent N, N-dimethylformamide, the high-molecular non-ion surfactant C6 can be obtained, and the synthesis equation is as follows:

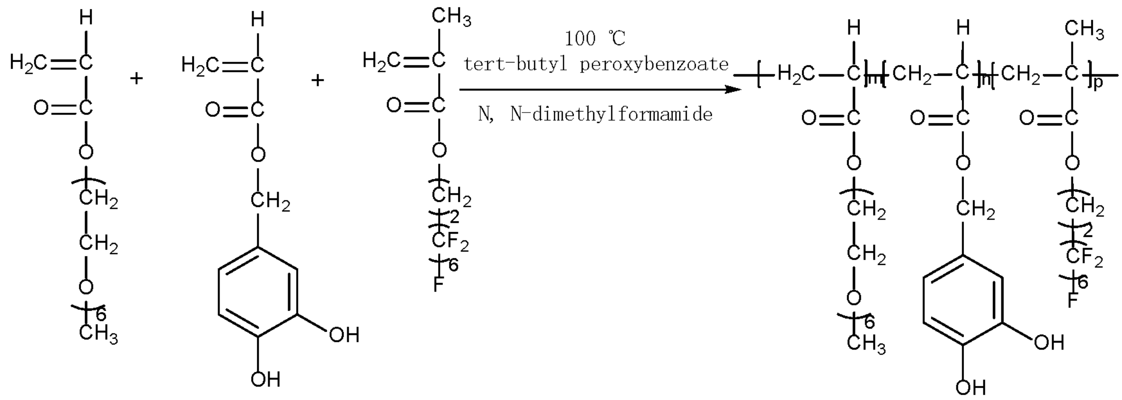


In the formula, m, n, p are independently selected from an integer greater than or equal to 1, and at least one in m, n, p is 1.

After testing, the number-average molecular weight of C6 was 31590 (g/mol), the critical micelle concentration was 0.092 g/L, and the corresponding minimum surface tension was 27mN/m. At the same time, according to the test results of 15wt% mesotrione suspension and 15wt% mesotrione suspension with 4wt% high-molecular non-ion surfactant C6 on the leaf surface of barnyard grass, the retention of the latter was increased by 37% compared with the former.

Example 7

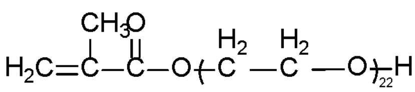

,

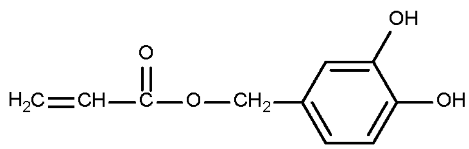

and

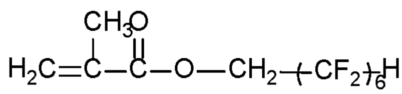

are dissolved in dimethyl sulfoxide (the usage of the solvent makes the total concentration of the monomers be 46wt%) according to the mass ratio of 20:1:20, stirring and heating to 75°C, after adding 7wt% azodiisobutyronitrile (based on the total mass of the monomers), the reaction is held for 36h at the temperature, and then by removing the solvent dimethyl sulfoxide, the high-molecular non-ion surfactant C7 can be obtained, and the synthesis equation is as follows:

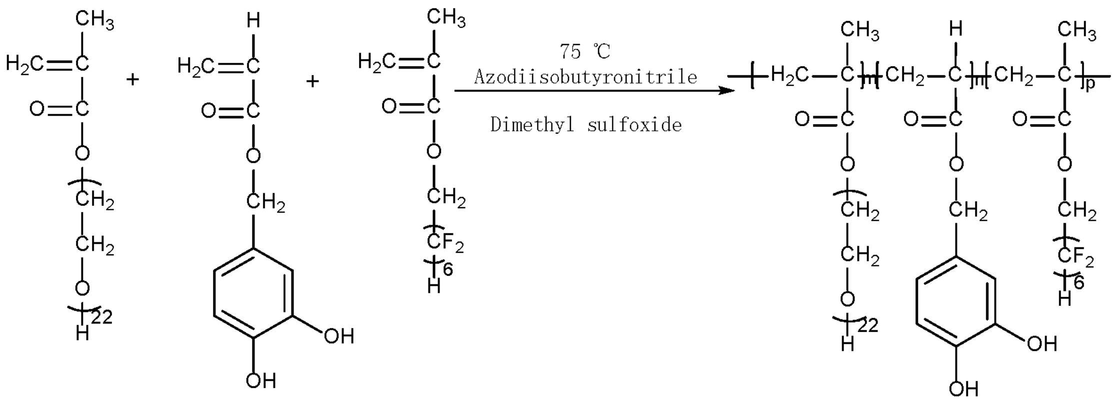


.

In the formula, m, n, p are independently selected from an integer greater than or equal to 1, and at least one in m, n, p is 1.

After testing, the number-average molecular weight of C7 was 86000 (g/mol), the critical micelle concentration was 0.052 g/L, and the corresponding minimum surface tension was 23mN/m. At the same time, according to the test results of 15wt% mesotrione suspension and 15wt% mesotrione suspension with 1wt% high-molecular non-ion surfactant C7 on the leaf surface of barnyard grass, the retention of the latter was increased by 5% compared with the former.

Example 8

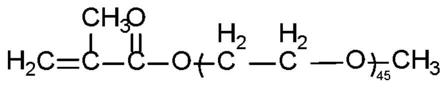
,
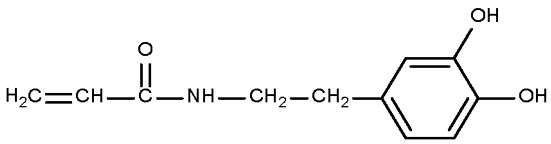

and a mixture of

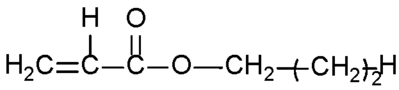

and

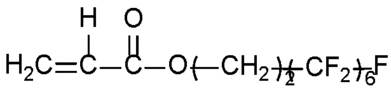

( mass ratio of 2:1) are dissolved in tetrahydrofuran (the usage of the solvent makes the total concentration of the monomers be 35wt%) according to the mass ratio of 8:6:10, stirring and heating to 55°C, after adding 4wt% azodiisobutyronitrile (based on the total mass of the monomers), the reaction is held for 10h at the temperature, and then by removing the solvent tetrahydrofuran, the high-molecular non-ion surfactant C8 can be obtained, and the synthesis equation is as follows:

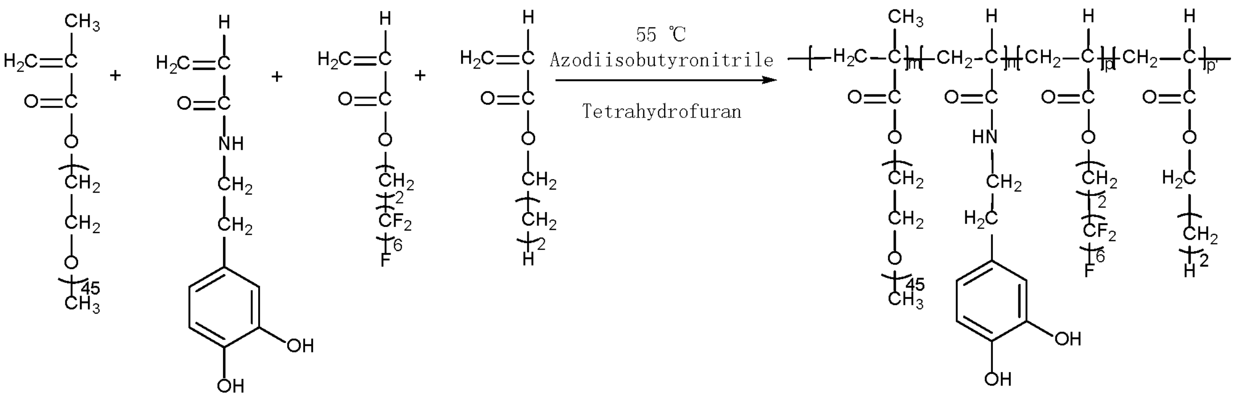


In the formula, m, n, p, p' are independently selected from an integer greater than or equal to 1, and at least one in m, n, p, p' is 1.

After testing, the number-average molecular weight of C8 was 57200 (g/mol), the critical micelle concentration was 0.662 g/L, and the corresponding minimum surface tension was 24mN/m. At the same time, according to the test results of 15wt% mesotrione suspension and 15wt% mesotrione suspension with 2wt% high-molecular non-ion surfactant C8 on the leaf surface of barnyard grass, the retention of the latter was increased by 33% compared with the former.

Example 9

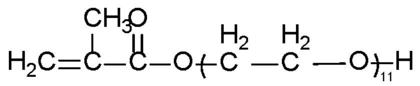

,

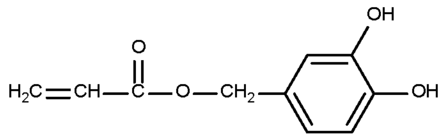

, and a mixture of

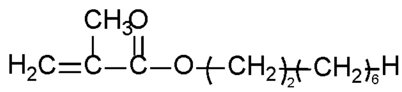

and

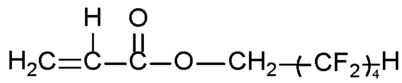

( mass ratio of 5:3) are dissolved in N, N-dimethylformamide (the usage of the solvent makes the total concentration of the monomers be 50wt% ) according to the mass ratio of 12:9:7, stirring and heating to 90°C, after adding 9wt% methyl ethyl ketone peroxide (based on the total mass of the monomers), the reaction is held for 17h at the temperature, and then by removing the solvent N, N-dimethylformamide, the high-molecular non-ion surfactant C9 can be obtained, and the synthesis equation is as follows:

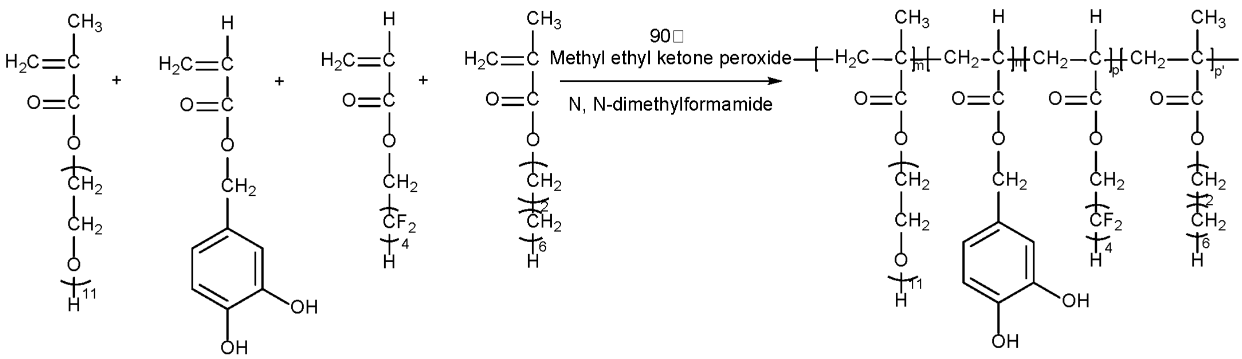


In the formula, m, n, p, p' are independently selected from an integer greater than or equal to 1, and at least one in m, n, p, p' is 1.

After testing, the number-average molecular weight of C9 was 7500 (g/mol), the critical micelle concentration was 0.834 g/L, and the corresponding minimum surface tension was 38mN/m. At the same time, according to the test results of 15wt% mesotrione suspension and 15wt% mesotrione suspension with 3wt% high-molecular non-ion surfactant C9 on the leaf surface of barnyard grass, the retention of the latter was increased by 38% compared with the former.

Example 10

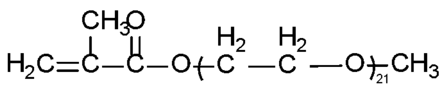

,

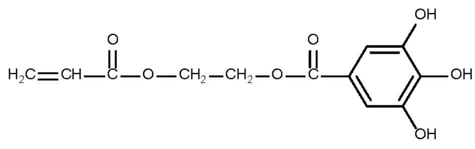

and the mixture of

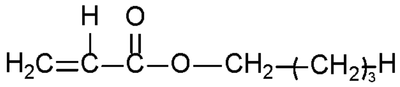 and 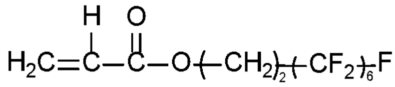

( mass ratio of 2:5) are dissolved in dimethyl sulfoxide (the usage of the solvent makes the total concentration of the monomers be 21wt%) according to the mass ratio of 10:8:17, stirring and heating to 85°C, after adding 3wt% benzoyl peroxide (based on the total mass of the monomers), the reaction is held for 27h at the temperature, and then by removing the solvent dimethyl sulfoxide, the high-molecular non-ion surfactant C10 can be obtained, and the synthesis equation is as follows:

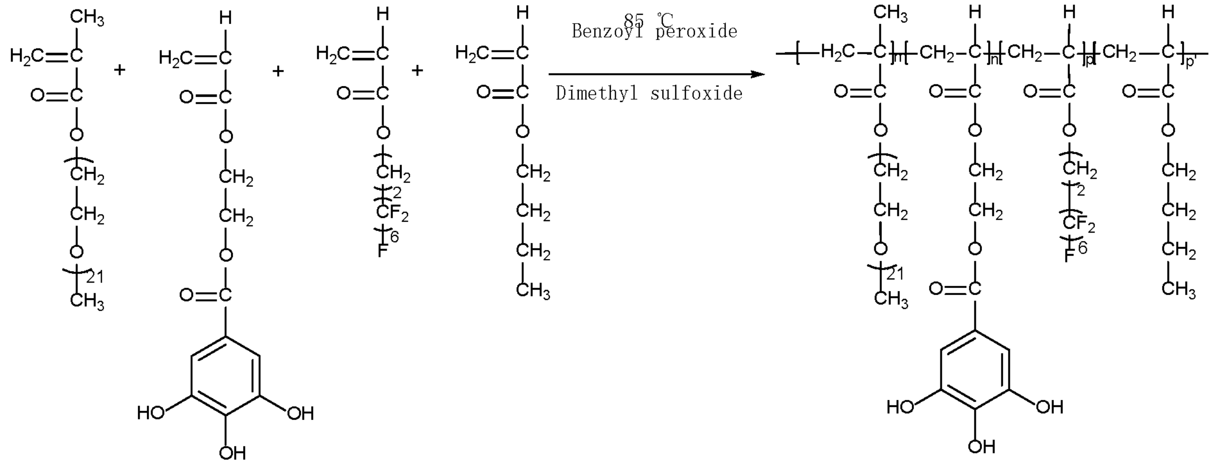


In the formula, m, n, p, p' are independently selected from an integer greater than or equal to 1, and at least one in m, n, p, p' is 1.

After testing, the average molecular weight of C10 was 26800 (g/mol), the critical micelle concentration was 0.715 g/L, and the corresponding minimum surface tension was 38mN/m. At the same time, according to the test results of 15wt% mesotrione suspension and 15wt% mesotrione suspension with 3wt% high-molecular non-ion surfactant C10 on the leaf surface of barnyard grass, the retention of the latter was increased by 29% compared with the former.

Example 11

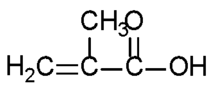 , 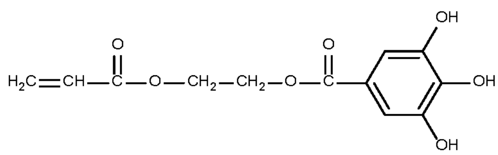

and a mixture of

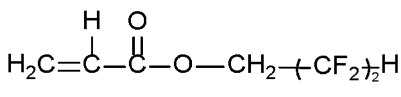

and

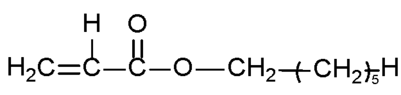

( mass ratio of 3:2) are dissolved in 1,4-Dioxane (the usage of the solvent makes the total concentration of the monomers be 25wt%) according to the mass ratio of 7:16:11, stirring and heating to 70°C, after adding 5wt% azodiisobutyronitrile (the dosage is based on the total mass of the monomer), the reaction is held for 20h at the temperature, and then by removing

the solvent 1,4-Dioxane, the high-molecular non-ion surfactant C11 can be obtained, and the synthesis equation is as follows:

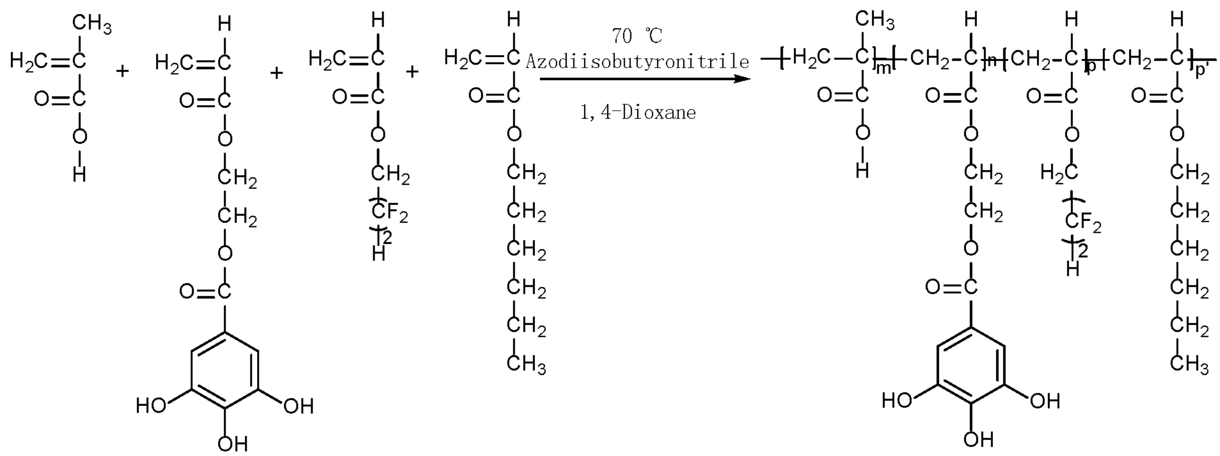


In the formula, m, n, p, p' are independently selected from an integer greater than or equal to 1, and at least one in m, n, p, p' is 1.

After testing, the number-average molecular weight of C11 was 71520 (g/mol), the critical micelle concentration was 1 g/L, and the corresponding minimum surface tension was 36mN/m. At the same time, according to the test results of 15wt% mesotrione suspension and 15wt% mesotrione suspension with 4wt% high-molecular non-ion surfactant C11 on the leaf surface of barnyard grass, the retention of the latter was increased by 31% compared with the former.

The performance comparison of the high-molecular non-ion surfactant prepared in example 1-11 is carried out below, as shown in Table 1:

Table 1. The performance comparison of the high-molecular non-ion surfactant

| High-molecular non-ion surfactant | Molecular weight (g/mol) | Critical micelle concentration (g/L) | Lowest surface tension (mN/m) | Addition amount (wt%) | Leaf retention of barnyard grass |
|---|---|---|---|---|---|
| C1 | 50996 | 0.466 | 32 | 2 | 25% increase |
| C2 | 12800 | 0.01 | 25 | 2 | 28% increase |
| C3 | 100000 | 0.001 | 20 | 4 | 47% increase |
| C4 | 52670 | 0.139 | 37 | 2 | 30% increase |
| C5 | 76800 | 0.68 | 40 | 3 | 40% increase |
| C6 | 31590 | 0.092 | 27 | 4 | 37% increase |
| C7 | 86000 | 0.052 | 23 | 1 | 5% increase |
| C8 | 57200 | 0.662 | 24 | 2 | 33% increase |
| C9 | 7500 | 0.834 | 38 | 3 | 38% increase |
| C10 | 26800 | 0.715 | 38 | 3 | 29% increase |
| C11 | 71520 | 1 | 36 | 4 | 31% increase |

As shown in Table 1, the number-average molecular weight of high-molecular non-ion surfactant C1-C11 is in the range of 1000~100000 (g/mol), indicating that the molecular weight of high-molecular non-ion surfactant prepared by the method provided by the present invention can be accurately controlled. Furthermore, high-molecular non-ion surfactants with different molecular weights can be prepared by controlling the reaction raw materials and reaction conditions when needed, and then the performance of high-molecular non-ion surfactants can be regulated, to reduce the influence of molecular weight on the adhesion of high-molecular non-ion surfactants.

Further, as shown in Table 1, the smaller the critical micelle concentration, the better the surfactant activity. In the embodiment, the critical micelle concentration of high-molecular non-ion surfactant C1-C11 is 0.001~1g/L, indicating that the prepared high-molecular non-ion surfactant C1-C11 has good activity.

Further, as shown in Table 1, the smaller the minimum surface tension, the better the wettability of the surfactant. In the embodiment, the minimum surface tension of the high-molecular non-ion surfactant C1-C11 is 20~40mN/m, indicating that the prepared high-molecular non-ion surfactant C1-C11 has good wettability.

Further, as shown in Table 1, the addition of high-molecular non-ion surfactants C1-C11 to 15% mesotrione suspension increased the retention of mesotrione suspension on the leaf surface of barnyard grass, indicating that the high-molecular non-ion surfactants C1-C11 showed strong adhesion ability. The reason related to the o-dihyoxybenzene group in the high-molecular non-ion surfactant molecules, which can form hydrogen bonds with the polar groups on the surface of plant leaves, thereby reducing the bounce, splashing, and breaking behavior of the suspension agent (15% mesotrione) on plant leaves, and making a increase retention of the 15% mesotrione suspension with high-molecular non-ion surfactant on plant leaves, which can further make plant leaves better absorb pesticides and also avoid pesticides entering the natural environment such as soil and rivers, as well as avoiding threats to the ecological environment and human health. At the same time, the prepared high-adhesive high-molecular non-ion surfactant is environmentally friendly, will not cause damage to plant leaves, and is safe to use.

Further, as shown in Table 1, the additional amount of high-molecular non-ion surfactant C1-C11 was different, and the retention of 15% mesotrione suspension of high-molecular non-ion surfactant C1-C11 in plant foliage was also different, indicating that its adhesion performance could be adjusted according to the reaction raw materials, reaction conditions and the amount of high-molecular non-ion surfactant.

Example 12

The herbicide used as test sample was 41% glyphosate isopropylamine saline with a dosage of 350ga.i/$hm^2$, and a highly adhesive high-molecular non-ion surfactant C1 was selected as the synergist (Based on the total mass of the glyphosate isopropylamine saline, the amount of C1 was 1wt%), and the retention rate of glyphosate isopropylamine salt deposited on the target foliage was 20.15% after simulated rainwater washing.

Controlled Experiment: The herbicide used as test sample was 41% glyphosate isopropylamine saline with a dosage of 350ga.i/$hm^2$, and a commercial SK-44 was selected as the synergist ( Based on the total mass of the glyphosate isopropylamine saline, the amount of SK-44 was 1wt%), and the retention rate of glyphosate isopropylamine salt deposited on the target foliage was 15.45% after simulated rainwater washing.

Example 13

The herbicide used as test sample was 30% glyphosate isopropylamine saline with a dosage of 350ga.i/$hm^2$, and a highly adhesive high-molecular non-ion surfactant C2 was selected as the synergist (Based on the total mass of glyphosate isopropylamine saline, the amount of C2 was 2wt%), and the retention rate of glyphosate isopropylamine salt deposited on the target foliage was 35.62% after simulated rainwater washing.

Controlled Experiment: The herbicide used as test sample was 30% glyphosate isopropylamine saline with a dosage of 350ga.i/$hm^2$, and a commercial SK-44 was selected as the synergist (Based on the total mass of glyphosate isopropylamine saline, the amount of SK-44 was 2wt%), and the retention rate of glyphosate isopropylamine salt deposited on the target foliage was 16.78% after simulated rainwater washing.

Example 14

The herbicide used as test sample was 200g/L glufosinate-ammonium aqueous agent with a dosage of 200ga.i/$hm^2$, and a highly adhesive high-molecular non-ion surfactant C3 was selected as the synergist (Based on the total mass of glufosinate-ammonium aqueous agent, the amount of C3 was 2wt%), and the retention rate of glufosinate-ammonium deposited on the target foliage was 30.56% after simulated rainwater washing.

Controlled Experiment: The herbicide used as test sample was 200g/L glufosinate-ammonium aqueous agent with a dosage of 200ga.i/$hm^2$, and a commercial SK-44 was selected as the synergist (Based on the total mass of the glufosinate-ammonium aqueous agent, the amount of SK-44 was 2wt%), and the retention rate of glyphosate isopropylamine salt deposited on the target foliage was 10.22% after simulated rainwater washing.

Example 15

The herbicide used as test sample was 50% butachlor emulsifiable concentrate with a dosage of 500ga.i/$hm^2$, and a highly adhesive high-molecular non-ion surfactant C4 was selected as the synergist (Based on the total mass of the butachlor emulsifiable concentrate, the amount of C4 was 3wt%), and the retention rate of butachlor deposited on the target foliage was 36.78% after simulated rainwater washing.

Controlled Experiment: The herbicide used as test sample was 50% butachlor emulsifiable concentrate with a

dosage of 500ga.i/hm$^2$, and a commercial SK-44 was selected as the synergist (Based on the total mass of the butachlor, the amount of SK-44 was 3wt%), and the retention rate of butachlor deposited on the target foliage was 28.93% after simulated rainwater washing.

Example 16

The fungicide used as test sample was 6% kasugamycin aqueous agent with a dosage of 750ga.i/hm$^2$, and a highly adhesive high-molecular non-ion surfactant C5 was selected as the synergist (Based on the total mass of the kasugamycin aqueous agent, the amount of C5 was 4wt%), and the retention rate of kasugamycin deposited on the target foliage was 52.69% after simulated rainwater washing.

Controlled Experiment: The fungicide used as test sample was 6% kasugamycin aqueous agent with a dosage of 750ga.i/hm$^2$, and a commercial SK-44 was selected as the synergist (Based on the total mass of the kasugamycin aqueous agent, the amount of SK-44 was 4wt%), and the retention rate of kasugamycin deposited on the target foliage was 41.39% after simulated rainwater washing.

Example 17

The fungicide used as test sample was 25% pyraclostrobin suspension with a dosage of 100ga.i/hm$^2$, and a highly adhesive high-molecular non-ion surfactant C6 was selected as the synergist (Based on the total mass of the pyraclostrobin suspension, the amount of C6 was 3wt%), and the retention rate of pyraclostrobin deposited on the target foliage was 43.51% after simulated rainwater washing.

Controlled Experiment: The fungicide used as test sample was 25% pyraclostrobin suspension with a dosage of 100ga.i/hm$^2$, and a commercial SK-44 was selected as the synergist (Based on the total mass of the pyraclostrobin suspension, the amount of SK-44 was 3wt%), and the retention rate of pyraclostrobin deposited on the target foliage was 26.71% after simulated rainwater washing.

Example 18

The fungicide used as test sample was 20% zinc thiazole suspension with a dosage of 300ga.i/hm$^2$, and a highly adhesive high-molecular non-ion surfactant C7 was selected as the synergist (Based on the total mass of the thiazole zinc suspension, the amount of C7 was 4wt%), and the retention rate of thiazole zinc deposited on the target foliage was 69.15% after simulated rainwater washing.

Controlled Experiment: The fungicide used as test sample was 20% zinc thiazole suspension with a dosage of 300ga.i/hm$^2$, and a commercial SK-44 was selected as the synergist (Based on the total mass of the thiazole zinc suspension, the amount of SK-44 was 4wt%), and the retention rate of thiazole zinc deposited on the target foliage was 52.14% after simulated rainwater washing.

Example 19

The acaricide used as test sample was 20% ethoxazole suspension with a dosage of 400ga.i/hm$^2$, and a highly adhesive high-molecular non-ion surfactant C8 was selected as the synergist (Based on the total mass of the ethoxazole suspension, the amount of C8 was 3wt%), and the retention rate of ethoxazole deposited on the target foliage was 65.22% after simulated rainwater washing.

Controlled Experiment: The acaricide used as test sample was 20% ethoxazole suspension with a dosage of 400ga.i/hm$^2$, and a commercial SK-44 was selected as the synergist (Based on the total mass of the ethoxazole suspension, the amount of SK-44 was 3wt%), and the retention rate of ethoxazole deposited on the target foliage was 57.91% after simulated rainwater washing.

Example 20

The acaricide used as test sample was 34% spirodiclofen suspension with a dosage of 30ga.i/hm$^2$, and a highly adhesive high-molecular non-ion surfactant C9 was selected as the synergist (Based on the total mass of the spirodiclofen suspension, the amount of C9 was 4wt%), and the retention rate of spirodiclofen deposited on the target foliage was 65.31% after simulated rainwater washing.

Controlled Experiment: The acaricide used as test sample was 34% spirodiclofen suspension with a dosage of 30ga.i/hm$^2$, and a commercial SK-44 was selected as the synergist (Based on the total mass of the spirodiclofen suspension, the amount of SK-44 was 4wt%), and the retention rate of spirodiclofen deposited on the target foliage was 50.73% after simulated rainwater washing.

Example 21

The acaricide used as test sample was 15% pyridaben emulsifiable concentrate with a dosage of 80ga.i/hm$^2$, and a highly adhesive high-molecular non-ion surfactant C10 was selected as the synergist (Based on the total mass of the s pyridaben emulsifiable concentrate, the amount of C10 was 3wt%), and the retention rate of pyridaben deposited on the target foliage was 64.83% after simulated rainwater washing.

Controlled Experiment: The acaricide used as test sample was 15% pyridaben emulsifiable concentrate with a dosage of 80ga.i/hm$^2$, and a commercial SK-44 was selected as the synergist (Based on the total mass of the pyridaben emulsifiable concentrate, the amount of SK-44 was 3wt%), and the retention rate of pyridaben deposited on the target foliage was 51.45% after simulated rainwater washing.

Example 22

The insecticide used as test sample was 5% abamectin emulsifiable concentrate with a dosage of 40ga.i/hm$^2$, and a highly adhesive high-molecular non-ion surfactant C11 was selected as the synergist (Based on the total mass of the abamectin emulsifiable concentrate, the amount of C11 was 4wt%), and the retention rate of abamectin deposited on the target foliage was 75.23% after simulated rainwater washing.

Controlled Experiment: The insecticide used as test sample was 5% abamectin emulsifiable concentrate with a dosage of 40ga.i/hm$^2$, and a commercial SK-44 was selected as the synergist (Based on the total mass of the abamectin emulsifiable concentrate, the amount of SK-44 was 4wt%), and the retention rate of abamectin deposited on the target foliage was 61.41% after simulated rainwater washing.

According to examples 12-22, a high-molecular non-ion surfactant provided by the present invention can be used to prepare herbicides, fungicides, acaricides, or insecticides. At the same time, the results of the rainwater erosion resistance performance of example 12-22 and the existing commercial SK-44 as synergist are compared as shown in Table 2:

Table 2 Comparison table of the effects of rain erosion resistance

| Example | Test agent | Synergists | addition amount (wt%) | Retention/% |
|---|---|---|---|---|
| Example 12 | herbicide 41% glyphosate isopropylamine saline | C1 | 1 | 20.15% |
| | | SK-44 | 1 | 15.45% |
| Example 13 | herbicide 30% glyphosate isopropylamine saline | C2 | 2 | 35.62% |
| | | SK-44 | 2 | 16.78% |
| Example 14 | herbicide 200g/L glufosinate-ammonium aqueous agent | C3 | 2 | 30.56% |
| | | SK-44 | 2 | 10.22% |
| Example 15 | herbicide 50% butachlor emulsifiable concentrate | C4 | 3 | 36.78% |
| | | SK-44 | 3 | 28.93% |
| Example 16 | fungicide 6% kasugamycin aqueous agent | C5 | 4 | 52.69% |
| | | SK-44 | 4 | 41.39% |
| Example 17 | fungicide 25% pyraclostrobin suspension | C6 | 3 | 43.51% |
| | | SK-44 | 3 | 26.71% |
| Example 18 | fungicide 20% zinc thiazole suspension | C7 | 4 | 69.15% |
| | | SK-44 | 4 | 52.14% |
| Example 19 | acaricide 20% ethoxazole suspension | C8 | 3 | 65.22% |
| | | SK-44 | 3 | 57.91% |
| Example 20 | acaricide 34% spirodiclofen suspension | C9 | 4 | 65.31% |
| | | SK-44 | 4 | 50.73% |
| Example 21 | insecticide 15% pyridaben emulsifiable concentrate | C10 | 3 | 64.83% |
| | | SK-44 | 3 | 51.45% |

(continued)

| Example | Test agent | Synergists | addition amount (wt%) | Retention/% |
|---|---|---|---|---|
| Example 22 | insecticide 5% abamectin emulsifiable concentrate | C11 | 4 | 75.23% |
| | | SK-44 | 4 | 61.41% |

According to Table 2, it can be seen that the prepared high-molecular non-ion surfactant C1-C11 was used to prepare herbicide, fungicide, acaricide, or insecticide, respectively, and the retention rate of the target foliar was measured after the simulated rainwater erosion experiment, which was higher than that of the existing commercial SK-44 synergist on the target foliage. The results showed that the prepared high-molecular non-ion surfactants had excellent ability, good wettability and adhesion ability, and a good use prospect.

The preferred example of the present invention is described in detail above, however, the present invention is not limited thereto. Within the scope of the technical conception of the present invention, a variety of simple variants of the technical scheme of the present invention may be carried out, including the combination of various technical features in any other appropriate way, and these simple variants and combinations shall likewise be regarded as the contents disclosed in the present invention and shall belong to the scope of protection of the present invention.

## Claims

1. A high-molecular non-ion surfactant, wherein the high-molecular non-ion surfactant contains structural units shown in the formula (1) or formula (2);

formula (1): 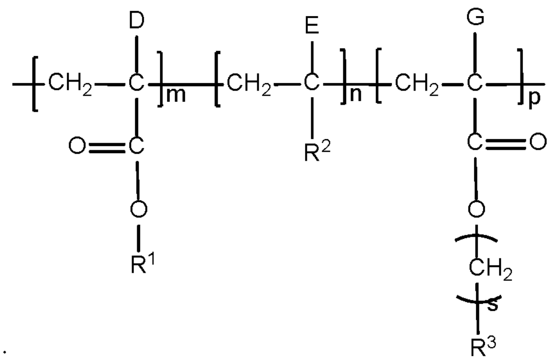 ;

formula (2): 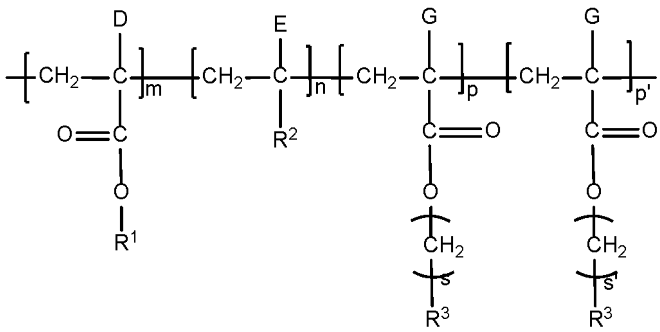 ;

wherein $R^1$ includes at least one of H, alkali metal or

$$-[CH_2CH_2O]_q-Y$$ ,

q is an integer and 1 <q≤ 90, Y is selected from H or alkyl group of $C_1$-$C_6$;
$R^2$ includes at least one of

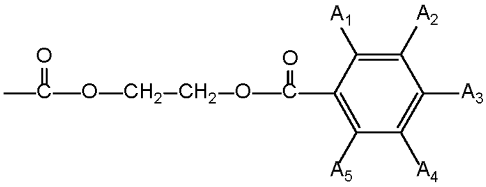, 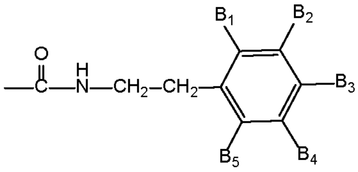

or

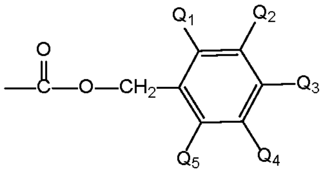,

$A_1$-$A_5$, $B_1$-$B_5$, $Q_1$-$Q_5$ are each independently selected from H, a hydroxyl group, or alkyl group of $C_1$-$C_6$, and at least two of $A_1$-$A_5$ are hydroxyl groups, at least two of the $B_1$-$B_5$ are hydroxyl groups, at least two of the $Q_1$-$Q_5$ are hydroxyl groups;
$R^3$ is selected from

$$-(CL_2)_r-Z$$,

r is an integer, and $2 \leq r \leq 6$; L and Z are independently selected from H or F;
D, E, G are independently selected from H or alkyl group of $C_1$-$C_6$;
s and s' are independently selected from an integer of 1-6;
m, n, p and p' are independently selected from an integer greater than or equal to 1, and at least one of m, n, p and p' is 1.

**2.** The high-molecular non-ion surfactant according to claim 1, wherein in the structural units shown in the formula (1) and formula (2),

wherein, $R^1$ includes at least one of H, alkali metal or

$$-[CH_2CH_2O]_q Y$$

, q is an integer and $1 < q \leq 90$, Y is selected from H or alkyl group of $C_1$-$C_6$;
$R^2$ includes at least one of

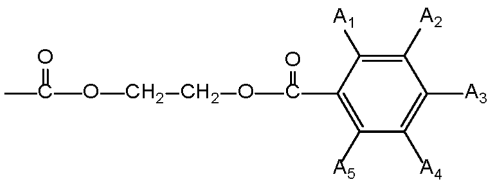, 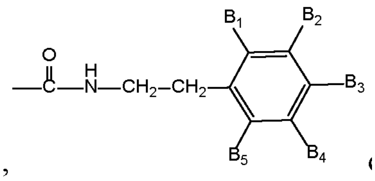

or

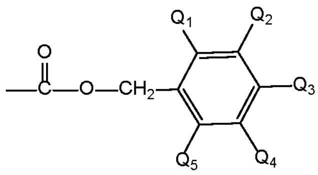,

$A_1$-$A_5$, $B_1$-$B_5$, $Q_1$-$Q_5$ are each independently selected from H, a hydroxyl group, or alkyl group of $C_1$-$C_6$, and at least two of $A_1$-$A_5$ are hydroxyl groups, at least two of the $B_1$-$B_5$ are hydroxyl groups, at least two of $Q_1$-$Q_5$ are hydroxyl groups;
$R^3$ is selected from r is an integer, and 2≤r≤6; L and Z are independently selected from H or F;
D, E, and G are independently selected from H or alkyl group of $C_1$-$C_4$;
s and s' are independently selected from an integer of 1-4;
m, n, p and p' are independently selected from an integer greater than or equal to 1, and at least one of m, n, p and p' is 1;
preferably, in the structural units shown in the formula (1) and formula (2), wherein, $R^1$ includes at least one of H, Na or

$$-\!\!\left[CH_2CH_2O\right]_q Y,$$

, q is an integer and 1 <q≤90, Y is selected from H or $CH_3$;
$R^2$ includes at least one of

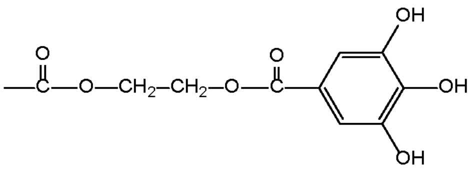
,
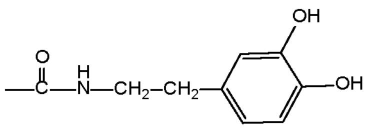

or

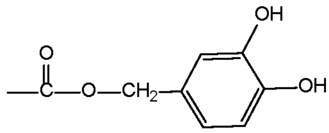
;

$R^3$ is selected from

$$-\!\!\left(CL_2\right)_r Z,$$

r is an integer, and 2≤r≤6; L and Z are independently selected from H or F;
D, E, and G are independently selected from H or $CH_3$;
s and s' are independently selected from an integer of 1 or 2;
m, n, p and p' are independently selected from an integer greater than or equal to 1, and at least one of m, n, p and p' is 1;
more preferably, in the structural units shown in the formula (1) and formula (2), wherein, $R^1$ includes

$$-\!\!\left[CH_2CH_2O\right]_q Y$$

, q is an integer and 10 <q≤50;
$R^2$ includes at least one of

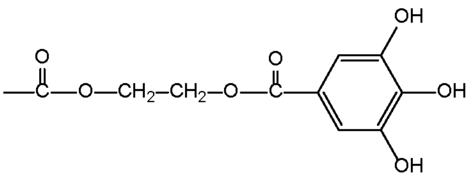
,
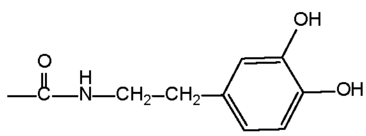

or

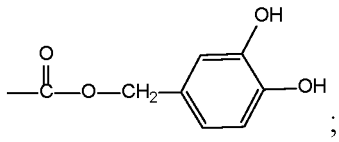

;

$R^3$ is selected from

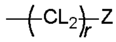

, r is an integer, and 4≤4≤6; L and Z are independently selected from H or F;
D, E, and G are independently selected from H or $CH_3$;
s and s' are independently selected from an integer of 1 or 2;
m, n, p and p' are independently selected from an integer greater than or equal to 1, and at least one of m, n, p and p' is 1.

3. The high-molecular non-ion surfactant according to claim 1 or claim 2, wherein the formula (2) has a structural shown in formula (2'):

formula (2'): 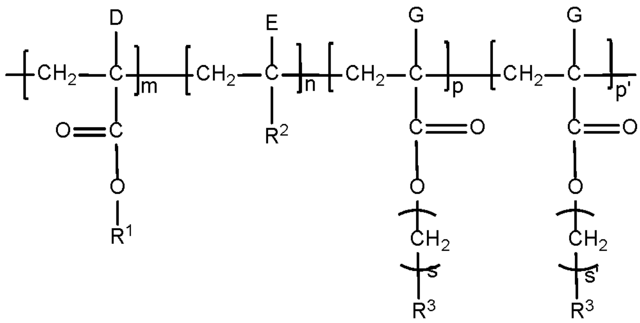 ;

wherein, $R^3$, $R^3$ are independently selected from

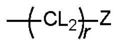

, r is an integer, and 2≤r≤6; L and Z are independently selected from H or F.

4. The high-molecular non-ion surfactant according to any one of claims 1 to 3, wherein the formula (1) includes at least one of structural shown in formula (I-1), formula (I-2), formula (I-3), formula (I-4), formula (I-5), formula (1-6), formula (1-7), formula (I-8), formula (I-9), formula (1-10), formula (I-11) and formula (I-12);

the formula (2) includes at least one of structural shown in formula (II-1), formula (II-2), formula (II-3), formula (II-4), formula (II-5), formula (II-6), formula (II-7), formula (II-8), formula (II-9), formula (II-10), formula (II-11), formula (11-12);

formula (I-1): 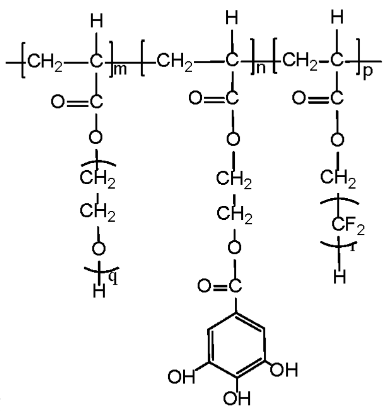 ; formula (I-2): 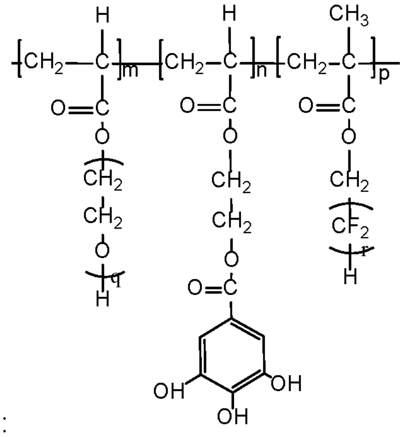 ;

formula (I-3): 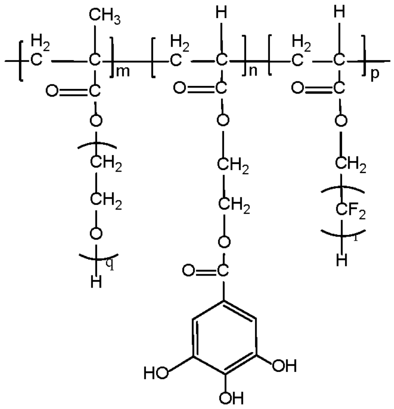 ; formula (I-4): 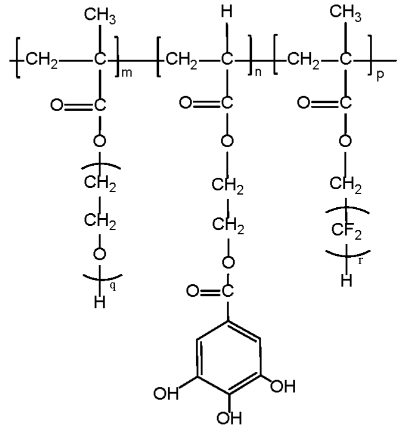 ;

formula (I-5): 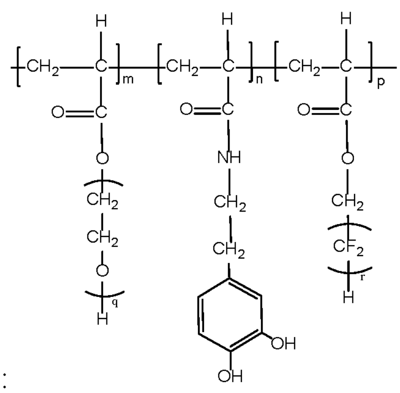 ; formula (I-6): 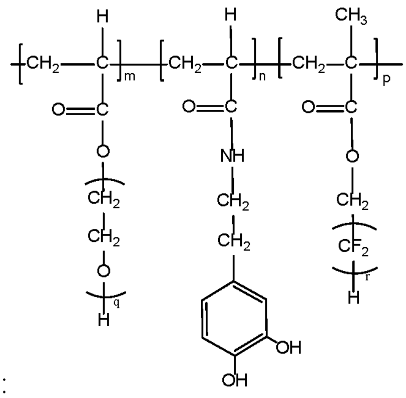 ;

formula (I-7): 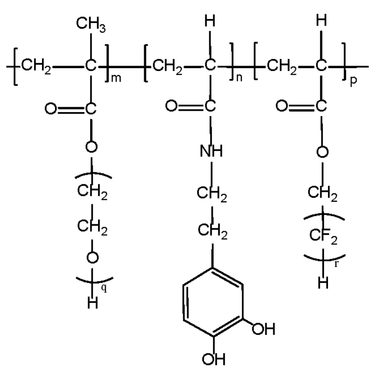 ; formula (I-8): 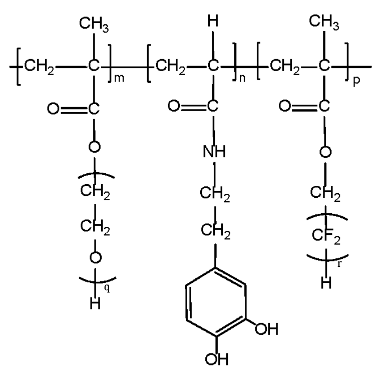 ;

formula (I-9) : 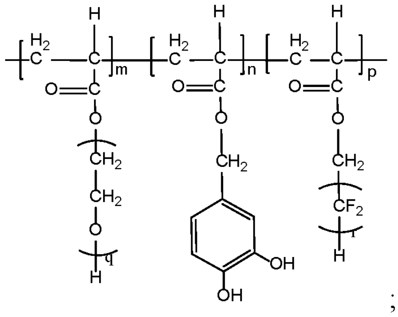 ; formula (I-10) : 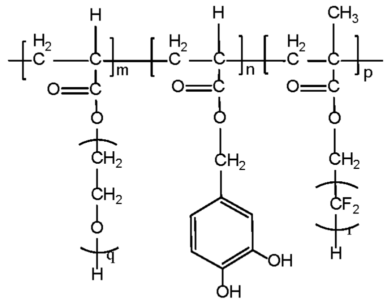 ;

formula (I-11): 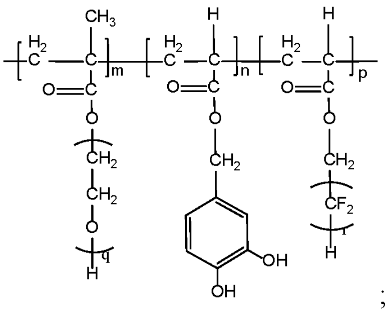 ; formula (I-12): 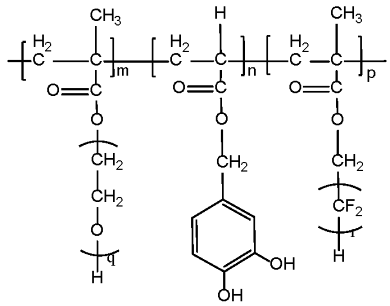 ;

formula (II-1): 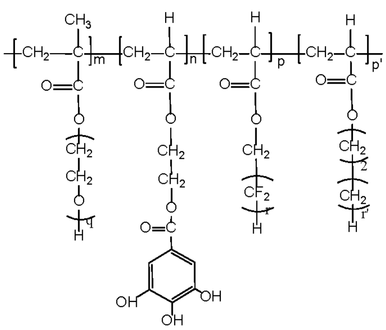 ; formula (II-2): 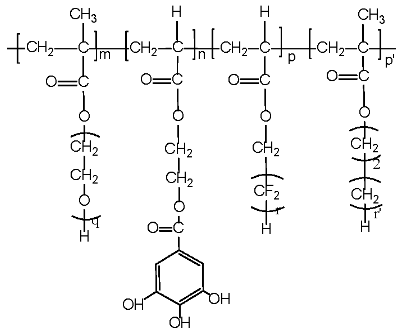 ;

formula (II-3): 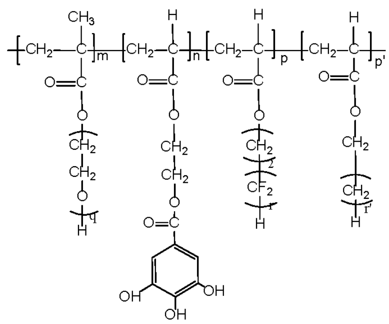 ; formula (II-4): 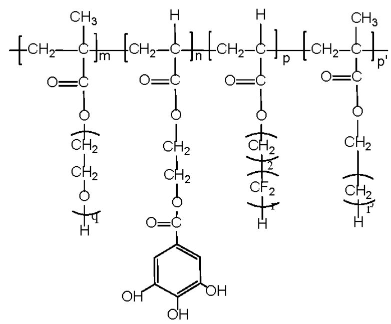 ;

formula (II-5): 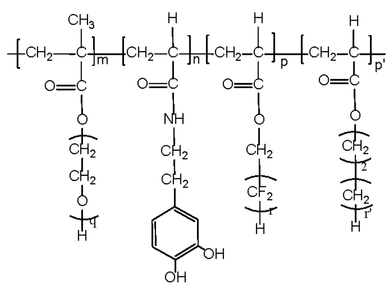 ; formula (II-6): 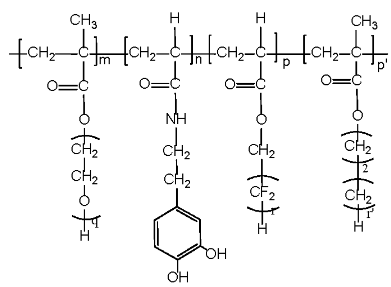 ;

formula (II-7): 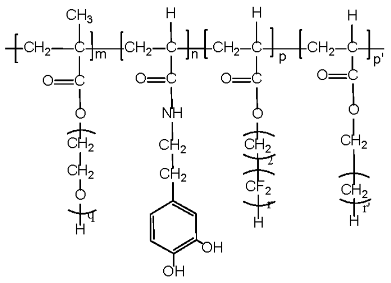 ; formula (II-8): 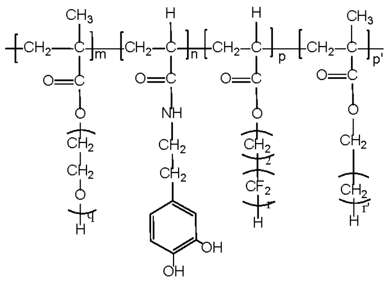 ;

formula (II-9): 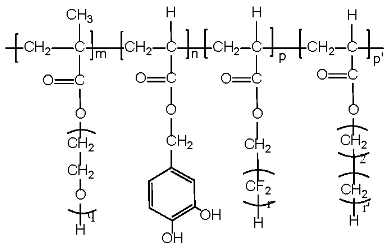 ; formula (II-10): 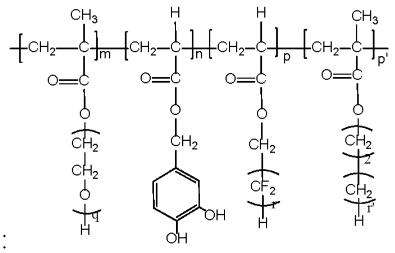 ;

formula (II-11): 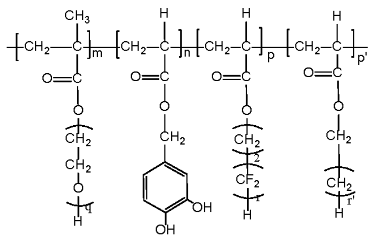 ;formula (II-12): 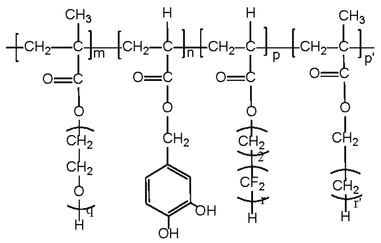 ;

wherein q is an integer and 10 <q≤50; r and r' are integers and 2≤r≤6; m, n, p and p' are independently selected from an integer with greater than or equal to 1, and at least one of m, n, p and p' is 1.

5. The high-molecular non-ion surfactant according to any one of claims 1 to 4, wherein in structural units shown in the formula (1), ratio of m: n: p is 1: 0.1-500: 0.01-100; preferably, ratio of m: n: p is 1: 1-100: 0.5-50
in structural units shown in the formula (2), ratio of m: n: p: p' is 1: 0.1-500: 0.01-100: 0.1-10; preferably, ratio of m: n: p: p' is 1: 1-100: 0.5-50:0.1-8.

6. The high-molecular non-ion surfactant according to any one of claims 1 to 5, wherein number-average molecular weight of the high-molecular non-ion surfactant is 1000-100000;
preferably, the number-average molecular weight of the high-molecular non-ion surfactant is 70000-100000.

7. The high-molecular non-ion surfactant according to any one of claims 1 to 6, wherein critical micelle concentration of the high-molecular non-ion surfactant is 0.001-1g/L;
preferably, the critical micelle concentration of high-molecular non-ion surfactant is 0.001-0.7g/L.

8. The high-molecular non-ion surfactant according to any one of claims 1 to 7, wherein surface tension of the high-molecular non-ion surfactant is 20-40mN/m.

9. A preparation method of the high-molecular non-ion surfactant according to any one of claims 1-8, wherein

method 1: for high-molecular non-ion surfactants containing structural units shown in formula (1), the method comprises: in presence of an initiator, monomer shown in formula (a-1), monomer shown in formula (a-2) and monomer shown in formula (a-3) are placed in a solvent for solution polymerization reaction to obtain the high-molecular non-ion surfactant containing the structural unit shown in formula (1);
method 2: for high-molecular non-ion surfactants containing structural units shown in formula (2), the method comprises: in presence of an initiator, monomer shown in formula (a-1), monomer shown in formula (a-2), monomer shown in formula (a-3) and monomer shown in formula (a-4) are placed in a solvent for solution polymerization reaction to obtain the high-molecular non-ion surfactant containing the structural unit shown in

formula (2);

formula (a-1): 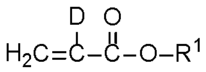 ; formula (a-2): 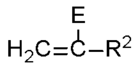 ;

formula (a-3): 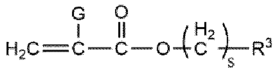 ; formula (a-4): 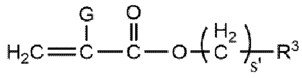 ;

wherein, definitions of $R^1$, $R^2$, $R^3$, $R^{3'}$ and D, E, G, s, s' are corresponding to the same definitions described in any one of claims 1-8;
preferably, the formula (a-4) has the structure shown in the formula (a-4'),

formula (a-4'): 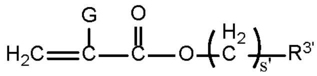 ;

wherein, $R^3$ and $R^{3'}$ are independently selected from

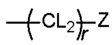

, and $R^3$, $R^{3'}$ are not the same; r is an integer, and $2 \leq r \leq 6$; L and Z are independently selected from H or F.

**10.** The preparation method according to the claim 9, wherein the method includes:

method 1: for high-molecular non-ion surfactants containing structural units shown in formula (1), the method comprises: placing 1-20 parts of formula (a-1), 1-20 parts of formula (a-2), 1-20 parts of formula (a-3) in a solvent for solution polymerization reaction which are stirred at 50-100 °C to obtain a first mixed solution, taking a heat preservation reaction after dropwise adding an initiator to the first mixed solution, and obtaining the high-molecular non-ion surfactant;
method 2: for high-molecular non-ion surfactants containing the structural units shown in formula (1), the method comprises: placing 1-20 parts of formula (a-1), 1-20 parts of formula (a-2), 1-20 parts of formula (a-3) and 1-20 parts of formula (a-4) in a solvent for solution polymerization reaction which are stirred at 50~100 °C to obtain a first mixed solution, taking a heat preservation reaction after dropwise adding an initiator to the first mixed solution, and obtaining the high-molecular non-ion surfactant.

**11.** The preparation method of high-molecular non-ion surfactant according to claim 9 or 10, wherein the solvent used in the solution polymerization reaction comprises one or more of 1,2-dichloroethane, N,N-dimethylformamide, dimethyl sulfoxide, tetrahydrofuran, 1,4-dioxane, and acetonitrile;

Preferably, a dosage of the solvent is 100-700wt% based on a total weight of the monomers shown in formula (a-1), formula (a-2) and formula (a-3) or based on a total weight of the monomers shown in formula (a-1), formula (a-2), formula (a-3) and formula (a-4);
Preferably, the dosage of the solvent is 200-500wt%.

**12.** The preparation method of high-molecular non-ion surfactant according to any one of claim 9-11, wherein the initiator comprises one or more of azodiisobutyronitrile, azodiisoheptanitrile, dimethyl azodiisobutyrate, benzoyl peroxide, tert-butyl peroxybenzoate and methyl ethyl ketone peroxide;
preferably, a dosage of the initiator is 1-10wt% based on a total weight of the monomers shown in formula (a-1), formula (a-2) and formula (a-3) or based on a total weight of the monomers shown in formula (a-1), formula (a-2), formula (a-3) and formula (a-4).

**13.** A synergist, wherein the synergist comprises a high-molecular non-ion surfactant of any one of claims 1-8.

**14.** Use of the synergist according to claim 13 in herbicide, fungicide, acaricide, or insecticide.

**INTERNATIONAL SEARCH REPORT**

International application No.
**PCT/CN2024/104656**

**A. CLASSIFICATION OF SUBJECT MATTER**

C08F 283/06(2006.01)i； A01N 25/30(2006.01)i； A01N 25/24(2006.01)i； A01N 25/04(2006.01)i； A01N 25/02(2006.01)i； A01P 1/00(2006.01)i； A01P 3/00(2006.01)i； A01P 7/02(2006.01)i； A01P 7/04(2006.01)i； A01P 13/00(2006.01)i； C08F220/22(2006.01)i

According to International Patent Classification (IPC) or to both national classification and IPC

**B. FIELDS SEARCHED**

Minimum documentation searched (classification system followed by classification symbols)

IPC: C08F283/-, A01N25/-, A01P1/-, A01P3/-, A01P7/-, A01P13/-, C08F220/-

Documentation searched other than minimum documentation to the extent that such documents are included in the fields searched

Electronic data base consulted during the international search (name of data base and, where practicable, search terms used)

CNTXT, ENTXT, CNKI, STN, ISI Web of Science: 表面活性剂, 乳化剂, 邻苯二酚, 非离子, 粘, 除草剂, 杀菌剂, 除螨剂, 杀虫剂, 农药, surfactant, emulsifier, pyrocatechol, catechol, non-ionic, adhesion, herbicide, bactericide, acaricide, pesticide

**C. DOCUMENTS CONSIDERED TO BE RELEVANT**

| Category* | Citation of document, with indication, where appropriate, of the relevant passages | Relevant to claim No. |
|---|---|---|
| PX | CN 117304417 A (NANKAI UNIVERSITY) 29 December 2023 (2023-12-29)<br>claims 1-6, and description, paragraphs 5-56, and embodiments 1-11 | 1-14 |
| A | 张静静等 (ZHANG, Jingjing et al.). "梳型碳氟高分子表面活性剂在硝磺草酮悬浮剂开发中的应用 (Application of Comb-type Fluorocarbon Polymer Surfactant in the Development of Nitrosulfonone Suspension Concentrate)"<br>*农药学学报 (Chinese Journal of Pesticide Science),*<br>Vol. 24, No. 5, 15 August 2022 (2022-08-15), pages 1206-1214<br>ISSN: 1008-7303,<br>page 1207, right column, paragraph 2-page 1208, left column, paragraph 1, and table 1 | 1-14 |
| A | US 2022025206 A1 (TOHOKU UNIVERSITY) 27 January 2022 (2022-01-27)<br>entire document | 1-14 |
| A | CN 102504082 A (HANGZHOU NORMAL UNIVERSITY) 20 June 2012 (2012-06-20)<br>entire document | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 October 2024** | **25 October 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2024/104656**

| Patent document cited in search report | Publication date (day/month/year) | Patent family member(s) | Publication date (day/month/year) |
|---|---|---|---|
| CN 117304417 A | 29 December 2023 | None | |
| US 2022025206 A1 | 27 January 2022 | JP 2022023797 A | 08 February 2022 |
| | | US 11932773 B2 | 19 March 2024 |
| CN 102504082 A | 20 June 2012 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311169113X